# EUROPÄISCHE PATENTSCHRIFT

(11) **EP 0 388 807 B1**
(45) Veröffentlichungstag und Bekanntmachung des Hinweises auf die Patenterteilung: **27.07.1994**
(21) Anmeldenummer: 90104970.0
(22) Anmeldetag: 16.03.1990
(51) Int. Cl.: B60M 1/18

(54) **Streckentrenner mit einem Trennisolator und mit einem als Hohlisolator ausgebildeten Überbrückungsorgan**
Section insulator with a sectioning insulator and a bridging part in the form of a hollow insulator
Isolateur de section avec un isolateur de sectionnement et un élément formant pont, sous forme d'un isolateur creux

(30) Priorität: 22.03.1989 DE 3909419
(43) Veröffentlichungstag der Anmeldung: 26.09.1990
(73) Patentinhaber: Asea Brown Boveri Aktiengesellschaft, 68309 Mannheim (DE)
(72) Erfinder: Krämer, Wilhelm, D-6902 Sandhausen (DE); Kielgas, Hans, D-6940 Weinheim (DE)
(74) Vertreter: Rupprecht, Klaus, Dipl.-Ing.

(56) Entgegenhaltungen:
- CH-A- 438 412
- DE-A- 2 331 859
- DE-A- 2 548 986

## Beschreibung

Die Erfindung bezieht sich auf einen der elektrischen Trennung einander benachbarter Abschnitte einer elektrischen Fahrleitung für Triebfahrzeuge dienenden Streckentrenner mit einem Trennisolator und mit einem als Hohlisolator ausgebildeten Überbrückungsorgan entsprechend dem Oberbegriff des Anspruches 1.

Bei elektrischen Bahnen mit Oberleitungsbetrieb werden die Fahrleitungen aus betrieblichen Gründen in einzelne Streckenabschnitte, auch Fahrdrahtabschnitte genannt, unterteilt. Die Unterteilung erfolgt unter anderem durch auch als Streckentrenner bezeichnete Isolatoren, welche in die Fahrleitungsnetze eingesetzt sind. Zur Befahrbarkeit in beiden Richtungen durch den Stromabnehmer des Fahrzeuges sind die Streckentrenner mit meistens paarweise vorgesehenen Schleifkufen versehen, welche den Stromabnehmer sicher am bzw. unter dem Streckentrenner vorbeiführen. Der Stromabnehmer des Triebfahrzeuges läuft somit ohne Stromunterbrechung von einem Fahrdrahtabschnitt auf die Schleifkufen und von diesen auf den benachbarten Fahrdrahtabschnitt. Hierbei kann ein Problem auftreten, nämlich beim Vorhandensein von unterschiedlichem elektrischen Potential zwischen den beiden benachbarten Fahrdrahtabschnitten und gegebenenfalls einem hohen Blindstromanteil des Ausgleichsstromes kann der von den Schleifkufen abspringende oder auf diese aufspringende Stromabnehmer des Triebfahrzeuges einen Lichtbogen ziehen, der sich aus der erwähnten Spannungsdifferenz speist und den Streckentrenner oder auch den Fahrdraht bis hin zu deren Zerstörung beeinträchtigen kann. Hierdurch kann eine erhebliche Störung des Bahnbetriebes eintreten, was sehr unerwünscht ist und zu weitreichenden Folgeereignissen führen kann.

Bekannt geworden ist ein Streckentrenner, dessen Trennstelle beim Übergang des Stromabnehmers von einem Fahrdrahtabschnitt auf den anderen jedesmal durch einen Schalter überbrückt wird, wodurch ein auftretender Lichtbogen schnell zum Verlöschen gebracht wird (DE-OS 23 31 859). Die mechanische Schalterbetätigung erfolgt allerdings auch dann, wenn kein Lichtbogen auftritt. Diese Anordnung hat den großen Nachteil, daß der Leistungsschalter, um solch einen muß es sich nämlich handeln, unnötig häufig betätigt wird und somit eine durchaus verkürzte Lebensdauer hat. Die Lebensdauer von Leistungsschaltern, beispielsweise von Vakuumschaltröhren, hängt nämlich nicht nur von den zu schaltenden Leistungen ab, sondern sehr wohl auch von der Anzahl der mechanischen Schaltvorgänge, d. h. diese Lebensdauer ist auch dann durchaus begrenzt, wenn stets nur kleine oder gar keine Leistungen zu schalten sind.

Zur Vermeidung dieses Nachteiles ist in der DE-PS 25 48 986 eine Anordnung vorgeschlagen worden, bei welcher der Lichtbogen von einem Schalter zur Löschung gebracht wird, der von einem elektromagnetischen Antrieb betätigt wird. Hierbei ist die Antriebsspule des elektromagnetischen Antriebes für den Schalter zwischen einer Hilfselektrode und einem parallel zu dieser Hilfselektrode verlaufenden Fahrdrahtabschnitt eingeschaltet. Diese Hilfselektrode ist gegenüber dem parallel verlaufenden Fahrdrahtabschnitt und auch gegenüber den vom benachbarten Fahrdrahtabschnitt ausgehenden Schleifkufen isoliert. Der Fußpunkt eines auftretenden Lichtbogens kommutiert von dem parallel gelegenen Fahrdrahtabschnitt auf die Hilfselektrode, wodurch die genannte Antriebsspule mit Strom, nämlich dem Lichtbogenstrom, versorgt und somit der genannte Schalter betätigt wird. Die beiden Pole des Schalters sind - wie auch bei der vorher genannten Anordnung - mit den einander benachbarten Fahrdrahtabschnitten leitend verbunden. Eine Betätigung des Schalters hat somit zur Folge, daß die beiden Fahrdrahtabschnitte für eine sehr geringe Zeitdauer miteinander kurzgeschlossen sind. Hierdurch wird der Lichtbogen, der von den Schleifkufen, die übrigens mit dem einen Fahrdrahtabschnitt leitend verbunden sind, zum anderen, benachbarten Fahrdrahtabschnitt sowie der genannten Hilfselektrode verläuft, zum Verlöschen gebracht. Ist dieses geschehen, so wird auch die Stromversorgung des elektromagnetischen Antriebes unterbrochen und somit der Schalter wieder geöffnet. Im Unterschied zur vorher genannten Anordnung wird hier der Schalter nur beim tatsächlichen Auftreten eines Lichtbogens betätigt, keinesfalls also bei jedem Überfahren des Streckentrenners. Nachteilig bei dieser Anordnung ist es, daß der Lichtbogenstrom starken Schwankungen unterworfen ist, weshalb auch die auftretenden Anzugskräfte beim elektromagnetischen Antrieb stark variieren, so daß ein sicheres Betätigen des Schalters nicht immer gewährleistet ist und es somit nach wie vor zu Zerstörungen oder Beeinträchtigungen des Streckentrenners kommen kann.

Zur Vermeidung der eben genannten Gefahr wird in einer älteren deutschen Patentanmeldung (Aktenzeichen des Deutschen Patentamtes: P 38 16 841.3 entsprechend EP-A-342 540), die zum Zeitpunkt der Hinterlegung dieser Anmeldung noch nicht veröffentlich ist, vorgeschlagen, die Antriebsspule des elektromagnetischen Antriebes für den Schalter nicht unmittelbar an die Hilfselektrode und den einen Fahrdrahtabschnitt zu schalten, sondern stattdessen mittelbar über einen Sättigungsstromwandler, dessen an die Antriebsspule angeschaltete Sekundärspannung konstant und unabhängig von der Höhe des in der Primärwicklung fließenden Lichtbogenstromes ist. Hierbei wird dem genannten Sättigungsstromwandler noch eine elektronische Schaltung nachgeordnet, mittels welcher die Antriebssituation für den Schalter noch weiter verbesserbar ist, beispielsweise auch eine Verzögerung des Einschalt- und Ausschaltzeitpunktes des Schalters erzielbar ist, wodurch eine Wiederzündung des gelöschten Lichtbogens vermieden werden kann.

Bei der praxisgerechten Realisation eines Streckentrenners der beiden zuletzt genannten Ausstattungen ergeben sich aber nun einige Probleme, und zwar insbesondere bei der Konzeption des Überbrückungsorgans, worin nicht nur der Schalter, sondern auch dessen Antrieb und gegebenenfalls weitere Teile bzw. Funktionsgruppen anzuordnen sind. Dieses Überbrückungsorgan muß nämlich außergewöhnlich zugfest sein, da die in den Tragseilen auftretende Zugspannung durchaus eineinhalb bis zwei Tonnen betragen kann. Isolatoren, zumal wenn sie hohl ausgebildet sind, halten jedoch nur begrenzten Zugkräften stand, hingegen durchaus größeren Druckkräften bei sonst gleicher Ausgestaltung. Demgegenüber steht die Forderung, die Überbrückungsorgane, nicht zuletzt aus Gewichtsgründen, in ihren Ausmaßen soweit wie irgend vertretbar gering zu halten. Eine weitere Problematik ist darin zu sehen, daß die Streckentrenner und somit auch deren Überbrückungsorgane ständig wechselnden und mitunter auch extremen Witterungsverhältnissen standhalten müssen, und zwar dieses sowohl in Bezug auf Feuchtigkeitseinflüsse, als auch auf hohe Temperaturunterschiede von beispielsweise + 60°C und mehr, bis hin zu Minustemperaturen von 30°C und tieferen Temperaturen. Gelangt in das Innere eines Überbrückungsorgans atmosphärische Luft mit einem hohen Anteil an Feuchtigkeit, so kann sich hier Kondenswasser bilden, welches die im Überbrückungsorgan aufgenommenen Funktonselemente zunehmend ungünstig beinflußt und zu Ausfallerscheinungen führen kann. Derartige Ausfallerscheinungen sind insbesondere dann sehr kritisch, wenn beispielsweise die Schaltmechanik des elektromagnetischen Antriebs versagt und der im Einschaltzustand befindliche Schalter nicht mehr in seine Ausschaltstellung zurückgeführt wird.

Ausgehend von einem Streckentrenner der zuletzt erörterten und auch im Oberbegriff des Anspruches 1 definierten Art und Ausbildung, stellt sich die Erfindung zur Aufgabe, ein Überbrückungsorgan für einen Streckentrenner zu schaffen, welches sowohl den rein mechanischen, als auch den wechselnden klimatischen Bedingungen störungsfrei standzuhalten vermag, seiner Konzeption nach über sehr lange Zeiträume hinweg wartungsfrei arbeiten kann, in einem dennoch auftretenden Störungsfall, der sehr wohl auch in einem Schaden im Umfeld des Streckentrenners begründet sein kann, auftretende Folgeschäden weitgehend vermeidet und deshalb zunächst in eine gesonderte die Überbrückung verhindernde Schaltstellung verändert und sodann gewartet und notwendigenfalls durch Austausch defekter Funktionsorgange repariert und wieder verwendungsfähig gemacht werden kann.

Die Lösung dieses weitgestreckten Aufgabenkomplexes wird erfindungsgemäß dadurch erzielt, daß der Hohlisolator des Überbrückungsorgans im wesentlichen aus einem hohlzylindrischen Isolierrohr mit beidendig des Isolierrohres dichtend anliegenden Verschlußdeckeln, und aus wenigstens zwei mit entsprechenden Schraubelementen ausgestatteten Zugstangen besteht, welche die Verschlußdeckel - hiergegen radial abgedichtet - durchdringen und mittels welcher die zuvor genannten Teile des Hohlisolators gegeneinander verspannt sind, wobei die Zugspannung jeder einzelnen Zugstange deutlich größer ist als die zu erwartende Zugspannung am zwischen Tragseilen eingespannten Überbrückungsorgan. Die Aufgabenlösung wird weiterhin dadurch erzielt, daß im Inneren des Hohlisolators außer einem Leistungsschalter und dessen elektromagnetischem Antrieb in Gestalt eines Hubmagneten auch noch ein Sättigungsstromwandler mit einer - schaltungsmäßig gesehen - nachgeordneten elektronischen Kondensatorschaltung enthalten ist, darüber hinaus eine von einem Haltemagneten betätigbare Sperrvorrichtung zur Arretierung des Leistungsschalters in seiner Einschaltstellung wenigstens so lange, wie der Hubmagnet mit Spannung versorgt ist, und schließlich ein Trennschalter, dessen Schaltstellung mittels einer aus dem Überbrückungsorgan bzw. aus einem Verschlußdeckel seines Hohlsisolators herausgeführten, manuell oder motorisch oder elektromagnetisch betätigbaren Antriebswelle veränderbar sein kann.
Durch diese Mittel und Maßnahmen ist ein Überbrückungsorgan realisierbar, dessen Hohlisolator in montierter Lage des gesamten Streckentrenners keiner Zugbelastung, sondern stattdessen einer Druckbelastung ausgesetzt ist, die - wie oben bereits angedeutet - weitaus besser beherrschbar ist. Die für den Schalterbetrieb erforderlichen Funktionsorgane sind, nicht zuletzt dadurch bedingt, daß der Hohlisolator nunmehr wesentlich dünnwandiger ausgeführt werden kann als dieses bei einer Zugbeanspruchung der Fall wäre, allesamt in einem vergrößerten Innenraum des Hohlisolators unterzubringen und, da das Überbrükkungsorgan allseitig abgedichtet ist, auch weitgehend gegen äußere Witterungseinflüsse, insbesondere gegen Feuchtigkeit und gegen Verschmutzung, geschützt. Als sehr zweckmäßig erweist sich auch der Gedanke, im Inneren des Überbrückungsorgans zusätzlich einen Trennschalter anzuordnen, der zwar von außen her betätigbar, ansonsten aber im Inneren in gleicher Weise geschützt angeordnet ist, wie es bei den übrigen Funktionsorganen der Fall ist. Mittels eines derartigen Trennschalters ist beim Auftreten irgendeines Defektes oder auch nur eines Verdachts, daß ein Defekt vorliegt, eine in Reihe geschaltete zusätzliche und ganz unabhängige Trennstelle realisierbar und diese Trennstelle auch blockierbar, bis eine Wartungs- oder Reparaturkolonne am Ort des vermuteten Schadens eintrifft und die Situation überprüfen, d. h. gegebenenfalls das Überbrückungsorgan auswechseln kann. Ein solches Überbrückungsorgan ist beim Vorliegen eines Schadens bei einem seiner Funktionsorgane aber nun keinesfalls völlig unbrauchbar geworden, vielmehr erlaubt die vorgesehene Konstruktion ein Öffnen des Überbrückungsorgans und bei einem eventuellen Bedarf die Vornahme einer Reparatur. Solche Möglichkeiten sind bei den bekannten Überbrückungsorganen nicht gegeben, weil es sich hierbei um unlösbar miteinander verbundene Einzelteile handelte, die nicht zerstörungsfrei demontiert werden können.

Vorteilhafte Maßnahmen sind in den Vorschlägen zu sehen, das hohlzylindrische Isolierrohr aus einem witterungsbeständigen Gießharz herzustellen, es eignen sich aber auch Glas oder ein keramisches Material dazu, insbesondere Porzellan, wobei gerade bei letzterem Material die vorgesehene Druckbelastung anstatt einer Zugbelastung dem Material sehr entgegenkommt. Außerdem wird vorgeschlagen, das hohlzylindrische Isolierrohr auf seiner äußeren Mantelfläche zur Kriechstreckenverlängerung mit einer großen Anzahl umlaufender Nuten vergleichsweise geringer Tiefe auszustatten, so daß zwischen diesen Nuten umlaufende Kragen oder Rippen gebildet sind, die den Außendurchmesser des Hohlisolators nur relativ gering vergrößern, anstatt, wie sonst meist üblich, die umlaufendenen Rippen im Außendurchmesser weit ausladend vorzusehen. Durch diese Maßnahme ist der Gesamtaußendurchmesser des Überbrückungsorgans in einem akzeptablen Ausmaß zu halten und der lichte Durchmesser seines Hohlisolators so groß herzustellen, daß die darin aufzunehmenden Teile einen genügenden Platz erhalten, ohne eine hinreichende Festigkeit des Hohlisolators und auch eine genügende elektrische Sicherheit bezüglich der Kriechstromfestigkeit zu beeinträchtigen.

Ein anderer vorteilhafter Vorschlag befaßt sich mit der Materialwahl für die erforderlichen Zugstangen, welche nämlich durchgehend aus Isolierstoff bestehen sollen, insbesondere aus einem glasfaserverstärkten Kunststoff.

Stäbe aus glasfaserverstärktem Kunststoff sind imstande, beachtlichten Zugkräften standzuhalten. Gleichzeitig erfüllen Stäbe aus derartigen Materialien die erforderlichen Isolationsanforderungen.

Eine sehr nützliche Weiterbildung des Erfindungsgedankens ist in dem Vorschlag zu sehen, das Innere des Überbrückungsorgans bzw. seines Hohlisolators nicht nur gegen die Außenatmosphäre "schlecht und recht" abzudichten, sondern stattdessen tatsächlich druckdicht und unterdruckdicht zu kapseln und darüber hinaus mit einem vorzugsweise gasförmigen Isoliermedium anzufüllen, welches günstigere Isolationseigenschaften aufweist als das Medium "Luft", nämlich beispielsweise Schwefelhexafluorid (SF₆) zur Füllung des Überbrückungsorgans vorzusehen. Hierdurch ist die elektrische Sicherheit im Inneren des Überbrückungsorgans zu verbessern und außerdem können aus elektrischen Gründen erforderliche Abstände in einem deutlichen Ausmaß verringert werden, was eine kompaktere Bestückung im Inneren des Überbrückungsorgans gestattet und im übrigen auch das Gewicht des Gerätes zu verringern vermag.

Ein zweckmäßiger Ausgestaltungsvorschlag befaßt sich mit dem im Überbrückungsorgan anzuordnenden Schalter, wofür die Verwendung einer Vakuumschaltröhre vorgeschlagen wird, deren Betätigungsstößel direkt oder indirekt sowohl mit einer Rückstellfeder, als auch mit einer Kontaktdruckfeder kombiniert werden soll. Derartige Federelemente begünstigen die Erzielung eines guten Kontaktdruckes, übrigens auch dann noch, wenn die Kontakte nach einer größeren Anzahl von Schalthandlungen mit einem Abbrand behaftet sind, und außerdem auch ein sicheres Aufreißen der Kontakte beim Ausschaltvorgang auch dann, wenn eine gewisse Verschweißung zwischen den Kontakten eingetreten sein sollte. Eine solche Verschweißung tritt nur sehr selten auf, sie ist aber nicht absolut zu vermeiden, wie die Erfahrung lehrt.

Eine vorteilhafte Ausgestaltung der Schalteranordnung im Inneren des Überbrückungsorgans kann auch in dem Vorschlag gesehen werden, den Betätigungsstößel des Leistungsschalters oder ein damit in Verbindung stehendes Element in Form beispielsweise eines Federtellers oder eines vorstehenden Stiftes beim Ausschaltvorgang an einen ausfedernden oder elastisch wenigstens geringfügig verformbaren Begrenzungsanschlag auftreffen zu lassen, welch letzterer den Ausschalthub begrenzt und zugleich den Aufschlag dämpft. Damit einhergehend ist auch der Vorschlag zu nennen, den Anker des Hubmagneten beim Ausschaltvorgang, d. h. bei Eintreten der Spannungslosigkeit, infolge der Wirkung eines Rückführorgans in seine Ausgangslage zurückzuführen, wobei die hierbei zurückgelegte Wegstrecke größer sein soll als diejenige des Betätigungsstößels des Leistungsschalters, und hierfür in einem zwischen dem Anker und dem Betätigungsstößel gelegenen Verbindungsgestänge, welches mit der Rückstellfeder und der Kontaktdruckfeder des Leistungsschalters in Verbindung steht, eine entsprechende Freilaufstrecke vorzusehen. Eine solche Freilaufstrecke erweist sich deshalb als vorteilhaft, weil das bewegliche Magnetsystem bzw. der Anker bereits eine gewisse Geschwindigkeit erreicht hat, ehe der gegen die Kraft der Rückstellfeder zu bedienende Betätigungsstößel mit dem Verbindungsgestänge in einen Kraftschluß gelangt. Hierdurch sind unter anderem die reine Schließzeit des Schalters verkürzbar oder auch die Schließkraft seiner Kontakte vergrößerbar, was der Funktion des ganzen Streckentrenners bzw. seines Leistungsschalters durchaus entgegenkommt.

Eine weitere Verbesserung des mechanischen Betätigungsablaufes kann dadurch erzielt werden, daß der bewegliche Teil des magnetischen Antriebes bzw. der Anker des Hubmagneten für den Leistungsschalter oder auch das zwischen Anker und dem Betätigungsstößel des Leistungsschalters gelegene Verbindungsgestänge, wie ein solches soeben erwähnt wurde, mit einem Schwunggewicht ausgestattet wird. Mittels eines solchen Schwunggewichtes sind zwei Effekte erzielbar, nämlich zum einen eine gewisse Verzögerung der Bewegung des Ankers in seiner allerersten Anlaufphase, zum anderen eine Verbesserung der Funktion der eingangs genannten Sperrvorrichtung zur vorübergehenden Arretierung des Leistungsschalters in seiner Einschaltstellung, wobei diese Sperrvorrichtung - wie bereits ausgeführt - von einem gesonderten Haltemagneten betätigt wird. Diese Betätigung der Sperrvorrichtung geht allerdings einher mit gewissen Reibungswiderständen, die zu überwinden das besagte Schwunggewicht zu verbessern vermag. Hierzu darf noch erwähnt werden, daß die Sperrvorrichtung erst mit der Beendigung des Einschaltvorganges des Leistungsschalters in Funktion treten soll, d. h. in einer weitgedrückten Stellung des Betätigungsstößels, in welcher sowohl dessen Rückdruckfeder als auch die Kontaktdruckfeder gespannt sind. Die Hammerwirkung des Schwunggewichtes hilft also hierbei, trotz der progressiv ansteigenden Gegenkräfte vor allem infolge der Kraft der Kontaktdruckfeder die Funktion der Sperrvorrichtung zu erfüllen, d. h. die vorgesehene Raststellung des Verbindungsgestänges zu erreichen.

Besonders zweckmäßig ist es hierbei, das Schwunggewicht an dem dem Anker des Hubmagneten zugekehrten Ende des Verbindungsgestänges anzuordnen, wobei zwischen diesem Verbindungsgestänge und dem Schwunggewicht und somit dem Anker bzw. einer vom Anker ausgehenden Justierstange ein Bewegungsspielraum in längsaxialer Richtung belassen wird, welcher einen Teil der oben bereits angesprochenen Freilaufstrecke bildet. In Zusammenhang mit dem Schwunggewicht hat diese Freilaufstrecke folgende Bedeutung: Bei einer einsetzenden Öffnungsbewegung des Leistungsschalters vermitteln sowohl die Kontaktdruckfeder als auch die Rückstellfeder ihre Energieinhalte zunächst dem Schwunggewicht. Liegt nun der seltene, aber wie schon gesagt: nicht ganz auszuschließende Fall einer Kontaktverschweißung beim Leistungsschalter vor, so reißt die vorher schon beschleunigte Masse des Schwunggewichtes hammerschlagartig die verschweißten Kontakte auseinander und die Funktion des ganzen Überbrückungsorgans bleibt voll erhalten.

Eine vorteilhafte Weiterbildung des Erfindungsgedankens ist dadurch erzielbar, daß der bewegliche Teil des magnetischen Antriebes bzw. eine Verlängerung des Ankers des Hubmagneten, hier insbesondere eine Verlängerung dieses Ankers in vom Leistungsschalter abgekehrter Richtung, mit einer Vorrichtung zur Schaltstellungsanzeige gekoppelt wird, welch letztere eine Dreh- oder Schubwelle enthält, die aus dem Inneren des Überbrückungsorgans bzw. aus dessen Hohlisolator herausgeführt und im herausgeführten Bereich mit einem Zeiger oder einer Anzeigescheibe ausgestattet ist. Ein derartiges Anzeigeorgan ist zwar - aus der eingangs bereits genannten DE-PS 25 48 986 - bekannt, allerdings in Form eines ausschwenkbaren Zeigers. Demgegenüber ist eine Dreh- oder Schubwelle wesentlich vorteilhafter, wenn es gilt, das Innere des Überbrückungsorgans dicht zu kapseln und auch die Reibungskräfte für die Betätigung der Anzeigevorrichtung gering zu halten.

Zur Aufgabenlösung gehört auch die Anordnung einer von einem Trennschalter überbrückbaren Trennstrecke innerhalb des Überbrückungsorgans. Einem zweckmäßigen Ausgestaltungsvorschlag zufolge wird vorgeschlagen, daß der Trennschalter von zwei in einem Abstand voneinander gelegenen Kontaktbuchsen und einem Schubkontaktstift gebildet wird, welch letzterer in der Einschaltstellung des Trennschalters beide Kontaktbuchsen elektrisch kontaktierend miteinander verbindet und welcher in der Trennstellung aus der einen Kontaktbuchse vollständig herausgezogen und soweit von ihr entfernt gelegen ist, daß zwischen dieser letztgenannten Kontaktbuchse und dem zugekehrten Ende des Schubkontaktes sowie auch der anderen Kontaktbuchse eine hinreichende Trennstrecke gebildet ist, mindestens in dem Ausmaß, wie solches in einschlägigen Vorschriften vorgesehen ist. Eine innerhalb des Überbrückungsorgans vorgesehene Trennstrecke ist gegen Witterungseinflüsse geschützt und somit wesentlich betriebssicherer, als dieses bei einer außerhalb des Überbrückungsorgans vorgesehenen Vorrichtung gleicher Wirkung der Fall wäre.

Eine zweckmäßige Ausgestaltung des zuletzt genannten Gedankens befaßt sich mit der Betätigung des genannten Trennschalters; es wird vorgeschlagen, den Schubkontaktstift des Trennschalters an seinem von den Kontaktbuchsen abgekehrten Längsbereich mit einer Zahnung zu versehen oder an diesem Längsende mit einer Zahnstange zu verbinden, wobei der verzahnte Bereich mit einem Zahnritzel zusammenwirkt, welches den Schubkontaktstift in die jeweils erwünschte Schaltstellung axial zu verschieben vermag. Aus Abdichtungsgründen kann es von Vorteil sein, diesen verzahnten Längsbereich des Schubkontaktstiftes oder darüber hinaus einen längeren Bereich des Schubkontaktstiftes in einem Schutzrohr anzuordnen, wodurch eine hermetische Abdichtung des Inneren des Überbrückungsorgans leichter realisiert werden kann. Unabhängig davon ist ein Vorschlag zu sehen, wonach die Betätigung des Trennschalters durch Verdrehen einer aus dem Hohlisolator bzw. aus dessen einem Verschlußdeckel herausgeführten, vorzugsweise am herausgeführten freien Ende mit einem radial verlaufenden Querbolzen versehenen Antriebswelle erfolgt, welche an ihrem in das Innere des Überbrückungsorgans gerichteten Ende das Zahnritzel trägt und mit diesem fest verbunden ist. Hierbei muß sich das Zahnritzel nicht im hermetisch gekapselten Bereich des Überbrückungsorgans befinden, sondern in einem Raumbereich zwischen einem Verschlußdeckel und einem äußeren Abschlußflansch, worauf in der Folge noch näher eingegangen werden soll.

Ein sehr zweckmäßiger Gestaltungsvorschlag ist darin zu sehen, im Inneren des Hohlisolators wenigstens zwei in einem Abstand voneinander gelegene Tragscheiben anzuordnen und unverschieblich zu befestigen, die der Abstützung und Halterung der im Hohlisolator aufgenommenen Funktionsorgane dienen. Derartige Tragscheiben bieten ebene Befestigungsflächen und erleichtern sehr wesentlich die Anbringung von Teilen, was am gekrümmten Innenmantel des Hohlisolators durchaus Schwierigkeiten bereiten würde. Diese Tragscheiben oder wenigstens eine der Tragscheiben kann außerdem auch unmittelbar zur Stromleitung dienen, beispielsweise für Funktionselemente des bereits genannten Trennschalters. Somit kann eine sonst notwendig werdende Zuleitung, beispielsweise zu einer Kontaktbuchse des Trennschalters, eingespart werden.

Eine vorteilhafte Bestückung des Überbrückungsorgans ist in dem Vorschlag zu sehen, im Inneren des Hohlisolators zwischen einem Verschlußdeckel und einer ersten Tragscheibe (die aus elektrisch leitendem Material bestehen und zugleich der Stromleitung dienen kann) den Leistungsschalter anzuordnen, zwischen der eben genannten ersten und einer zweiten Tragscheibe (die ebenfalls aus einem elektrisch leitenden oder stattdessen aus einem isolierenden Material bestehen kann) das Verbindungsgestänge zu positionieren, welches den Leistungsschalter mit seinem elektromagnetischen Antrieb koppelt, weiterhin im gleichen Längsbereich des Hohlisolators auch den Haltemagneten mit der von diesem betätigbaren Sperrvorrichtung anzuordnen, und schließlich auch die beiden vom Schubkontaktstift des Trennschalters elektrisch verbindbaren Kontaktbuchsen in dem Längsbereich zwischen den beiden Tragscheiben vorzusehen; zwischen der zweiten Tragscheibe und dem anderen, zweiten Verschlußdeckel sollen der elektromagnetische Antrieb in Gestalt des Hubmagneten, der Sättigungsstromwandler einschließlich einer elektronischen Baugruppe und auch noch Gestängeteile sowohl des Trennschalterantriebes als auch der mit dem Hubmagneten verbundenen Vorrichtung zur Schaltstellungsanzeige - falls eine solche vorgesehen ist - untergebracht und befestigt werden. Eine derartige Aufgliederung des Innenraumes des Hohlisolators gestattet eine raumsparende Bauweise und eine vollständige oder wenigstens sehr weitgehende Vormontage einzelner Baugruppen oder Bauelemente, bevor diese bei der Endmontage vom Hohlisolator umhüllt sind.

Eine sehr nützliche Ergänzung des eben genannten Aufbaues des Überbrückungsorgans kann dadurch erzielt werden, daß an demjenigen Längsende des Hohlisolators, in welchem der elektromagnetische Antrieb und der Sättigungsstromwandler angeordnet sind, zwischen dem Verschlußdeckel und einem äußeren Abschlußflansch ein gegen die Außenatmosphäre gar nicht oder jedenfalls nicht druckfest abgedichteter, jedoch gegen Witterungseinflüsse weitgehend geschützter Außenraum gebildet wird, in dem - wenigstens teilweise - die Dreh- bzw. Schubwelle der Vorrichtung zur Schaltstellungsanzeige sowie die Antriebswelle zur Betätigung des Trennschalters angeordnet und dann aus dem Überbrückungsorgan herausgeführt werden können. In diesem genannten Außenraum können sich also Getriebe- bzw. Umlenkelemente für die Schaltstellungsanzeige und für die Betätigung des Trennschalters befinden, Bauelemente also, deren Unterbringung im gekapselten Innnenraum des Hohlisolators nicht unbedingt notwendig ist und die durch die vorgeschlagene Positionierung wesentlich einfacher zu montieren sind. Allerdings kann es aus anderem Gründen auch zweckmäßig sein, die angesprochenen Getriebe- und Umlenkelemente so weit wie irgend möglich im druckdicht gekapselten Innenraum des Überbrückungsorgans unterzubringen.

Mit einer besonderen Gestaltung des entgegengesetzten Endes des Überbrückungsorgans befaßt sich ein weiterer Ausgestaltungsvorschlag. Demzufolge wird angeregt, an demjenigen Längsende des Hohlisolators, in welchem der Leistungsschalter angeordnet ist, nach außen hin und in einem Abstand vom Verschlußdeckel entfernt, eine metallische Abschlußplatte anzuordnen, die mit dem Verschlußdeckel über Isolierdistanzhülsen und die vom Hohlisolator austretenden Zugstangen fest verbunden, gegen den Verschlußdeckel jedoch elektrisch isoliert ist. Zwischen dem Verschlußdeckel und der Abschlußplatte kann nun ein Vorwiderstand angeordnet werden, beispielsweise ein solcher in Form eines gewickelten Flachbandmaterials mit seitlichen Isolierscheiben. Ein solcher Vorwiderstand vermag den mittels des Leistungsschalters zu schaltenden Strom deutlich zu begrenzen, wodurch der Leistungsschalter vor einer Überlastung geschützt, insbesondere aber bezüglich seiner Kurzschlußdaten kleiner gewählt werden kann. Derartige Ströme werden zwar nur in seltenen Einzelfällen auftreten, dennoch sind solche Konstellationen nicht ganz auszuschließen. Stromstarke Kurzschlüsse können insbesondere dann zu erwarten sein, wenn eine erste und eventuell auch eine zweite Schutzstufe bei einem sogenannten Unterwerk versagen, welches den entsprechenden Fahrleitungsabschnitt mit Spannung versorgt.

Eine funktionell vorteilhafte, mit dem eben genannten Vorwiderstand in Zusammenhang stehende Maßnahme besteht darin, von der zuletzt genannten metallischen Abschlußplatte einen an einem Ende mit dieser kontaktierend verbundenen und streckenweise mit einer Querschnittsverringerung versehenen Strombügel ausgehen zu lassen, dessen anderes Ende an dem einen bzw. am freien Ende des Vorwiderstandes kontaktierend befestigt ist. Dieser Strombügel erfüllt die Funktion einer Schmelzsicherung und dient, wie es ja allen vergleichbaren elektrischen Sicherungen zueigen ist, dem Schutz des Überbrückungsorgans. In normalen oder auch extremen Betriebssituationen soll dieser Strombügel gar nicht in Funktion treten, es sind aber Kurzschlußsituationen oder auch Blitzeinflüsse vorstellbar, in denen dieser als Schmelzsicherung fungierende Strombügel das Überbrükkungsorgan vor einer Zerstörung zu schützen und somit den Schadensfall sehr zu begrenzen vermag.

In der Erfindung eingeschlossen ist der Gedanke, das Überbrückungsorgan mit einem Trennschalter auszustatten, was für einen möglichst unterbrechungslosen Fahrbetrieb durchaus bedeutsam sein kann. Bei den bisher erläuterten Gestaltungseinzelheiten für einen Trennschalter handelt es sich stets um einen solchen, der im Normalbetriebsfall ständig geschlossen ist, d. h. sich in seiner überbrückenden Stellung befindet, und erst beim Auftreten eines Defektes beim Streckentrenner oder auch gegebenenfalls schon beim Auftreten eines Verdachtes, daß ein Defekt beim Überbrückungsorgan des Streckentrenners vorliegen könnte, in seine Ausschaltstellung verändert wird. Als Alternative hierzu kann eine Lösung interessant sein, die die Herstellung einer Trennstrecke nach jedem Schaltvorgang des Leistungsschalters vorsieht und vor einem nächsten Einschaltvorgang des Leistungsschalters diese Trennstrecke wieder überbrückt. Für eine solche Lösung wird vorgeschlagen, den Anker des elektromagnetischen Antriebes für den Leistungsschalter oder ein mit dem Anker verbundenes Gestängeteil mit einem Übertragungshebel gelenkig zu verbinden, welch letzterer mit seinem einen Ende an einem ortsfesten Drehlager angelenkt und an seinem entgegengesetzten Ende gelenkig mit dem Schubkontakt eines Trennschalters verbunden ist, und zwar derart, daß die Trennstrecke des Trennschalters noch vor dem Einschalten des Leistungsschalters hinreichend kontaktierend überbrückt ist und erst nach beendetem Ausschaltvorgang des Leistungsschalters wieder aufgetrennt wird.

Für eine derartige Schaltkonstellation kann es nach einem vorteilhaften Weiterbildungsvorschlag sehr zweckmäßig sein, den Schubkontakt des Trennschalters an seinem dem kontaktierenden Ende entgegengesetzten Längsende über ein Mitnehmerorgan mit einer manuell oder motorisch in längsaxialer Richtung aus einer Arbeitsstellung in eine Trennstellung und umgekehrt verschiebbaren Betätigungsstange zu koppeln, und zwar derart, daß in der Arbeitsstellung der Betätigungsstange der Schubkontakt vom Übertragungshebel ungehindert in seine überbrückende und zurück in seine trennende Stellung führbar ist, in der Trennstellung der Betätigungsstange hingegen soll auch der Schubkontakt vom Mitnehmerorgan in seiner trennenden Stellung gefesselt sein und gegebenenfalls vorher über das Mitnehmerorgan von seiner überbrückenden in seine trennende Stellung geführt werden können. Somit wird das eben angesprochene Ziel erreicht, nach dem Ausschalten des Leistungsschalters eine Trennstrecke zu bilden und noch vor einem Einschalten des Leistungsschalters diese Trennstrecke zu überbrücken, zusätzlich ist es aber möglich, mittels der besagten Betätigungsstange eine dauerhafte Trennstrecke zu bilden, was wünschenswert ist, falls beispielsweise der Leistungsschalter defekt zu sein scheint oder andere Umstände die dauerhafte Herstellung der Trennstrecke ratsam sein lassen. Ein solches Vorgehen kann beispielsweise auch bei Reparatur-oder Wartungsarbeiten an einem Fahrdrahtabschnitt sehr nützlich sein.

Eine konkrete Ausgestaltung der zuletzt genannten Gestaltungsidee kann in einem Vorschlag gesehen werden, wonach der dem Schubkontakt zugekehrte Längsbereich der Betätigungsstange aufgegabelt wird, ein je nach dessen Schaltstellung veränderbarer Längsbereich des Schubkontaktes zwischen den genannten Aufgabelungen aufgenommen wird und wonach das der Koppelung zwischen der Betätigungsstange und dem Schubkontakt dienende Mitnehmerorgan von einem den Schubkontakt quer durchdringenden Stift gebildet wird, dessen beiderseits des Schubkontaktes vorstehende Enden in Langlöcher eingreifen, welche in den Aufgabelungen der Betätigungsstange in Längsrichtung angeordnet sind. Hierdurch ist eine einfach realisierbare und problemlos funktionierende Vorrichtung zu schaffen, welche die erwünschten Schalthandlungen zu vollziehen vermag.

Nicht unerwähnt bleibe, daß der Antrieb der Betätigungsstange für die eben geschilderte Vorrichtung in praktisch gleicher Weise erfolgen kann, wie dieses für den weiter oben erläuterten Trennschalter bzw. für dessen Schubkontaktstift vorgeschlagen worden ist, nämlich die Betätigungsstange streckenweise mit einer Zahnung zu versehen und mittels eines Zahnritzels anzutreiben, welch letzteres mit einer Antriebswelle verbunden ist, die aus dem Hohlisolator bzw. aus dessen einem Verschlußdeckel herausgeführt ist.

Ein weiterer Vorschlag befaßt sich mit der Kombination des - wie auch immer gestalteten - Trennschalters mit einer Anzeigescheibe. Hierfür ist ein vorteilhafter Gestaltungsweg darin zu sehen, das aus dem Inneren des Überbrückungsorgans herausgeführte Organ eines Trennschalters oder einer den Trennschalter beeinflussenden Vorrichtung, beispielsweise die oben genannte Betätigungsstange, mit einer Anzeigescheibe zu koppeln, die in einer der beiden möglichen Schaltstellungen in einer Nische des Verschlußdeckels verborgen ist und in der zweiten Schaltstellung aus der Nische austritt bzw. bis zur Nischenrandung herausgeschoben und somit von außen her optisch erkennbar ist. Die sichtbare Stellung der Anzeigescheibe soll dann gegeben sein, wenn die Trennstrecke dauerhaft hergestellt ist und somit ein kurzzeitiges Kurzschließen der einander benachbarten Fahrdrahtabschnitte nicht möglich ist, auch dann nicht, wenn - wie eingangs geschildert - ein Lichtbogen vom Schleifkufenpaar zum Fahrdraht und weiter zur genannten Hilfselektrode gezogen wird.

Ein in eine ganz andere Richtung zielender Vorschlag befaßt sich mit der Austrittsstelle aus dem bereits erwähnten, gegen Witterungseinflüsse geschützten Außenraum für die Dreh- bzw. Schubwelle einer Vorrichtung zur Schaltstellungsanzeige oder auch einer Antriebswelle für eine manuelle Trennschalterbetätigung. Für eine solche Austrittsstelle, insbesondere wenn sie senkrecht oder schräg nach unten gerichtet ist, erweist es sich als sehr zweckmäßig, sie mit einem Tropfteller mit einer äußeren, umlaufenden Abtropfkante auszustatten. Hiermit kann ein Eindringen von beispielsweise Regenwasser in den besagten Außenraum praktisch vermieden werden und auch die Gefahr einer Vereisung der Austrittsstelle ist hierdurch weitgehend gebannt.

Weitere vorteilhafte Ausgestaltungen befassen sich mit speziellen Gestaltungseinzelheiten. So wird beispielsweise vorgeschlagen, die zwischen der ersten und der zweiten Tragscheibe im Inneren des Hohlisolators gelegene und hier zwischen den beiden Kontaktbuchsen herstellbare Trennstrecke eines Trennschalters seitlich des zwischenisolierten Verbindungsgestänges, welches den Anker des Hubmagneten mit dem Betätigungsstößel des Leistungsschalters verbindet, anzuordnen und im übrigen parallel zu diesem Verbindungsgestänge verlaufen zu lassen. Hierdurch ist nicht nur eine gute Raumausnutzung erzielbar, sondern es wird auch vermieden, daß ein gewisser Kontaktabrieb des Trennschalters, der sich nach einer größeren Anzahl von Schalthandlungen ergeben mag, das Verbindungsgestänge oder andere, im Inneren des Hohlisolators angeordnete Funktionselemente in irgendeiner Weise beeinträchtigt.

Eine sehr zweckmäßige Ausgestaltungseinzelheit ist auch in dem Vorschlag zu sehen, an den beiden Längsenden des Überbrückungsorgans, d. h. ausgehend von dessen äußeren Verschlußdeckeln bzw. von dessen Abschlußflansch und dessen Abschlußplatte, Einhängeösen oder vorspringende Ohren mit jeweils einer Einhängeöffnung auszubilden, was an sich bekannt ist, wobei aber nun die Einhängeösen bzw. Einhängeöffnungen deutlich oberhalb der in Längsrichtung verlaufenden Schwerachse des Überbrückungsorgans gelegen sind. Eine derartige Anordnung vermag die Stabilität der Sollage des Überbrückungsorangs deutlich zu verbessern, insbesondere dann, wenn von einem der Tragseile, zwischen denen das Überbrückungsorgan angeordnet ist, ein gewisser Drall ausgehen sollte.

Eine vorteilhafte Ausgestaltung ist auch in dem Vorschlag zu sehen, die Zugstangen zum Zusammenhalt der Teile des Hohlisolators an wenigstens einem ihrer Längsenden mit Mitteln zum Dehnungsausgleich auszustatten. Als solche Mittel können in geeigneter Weise zueinander angeordnete Tellerfedern Verwendung finden. Infolge des großen Temperaturspektrums, dem der Streckentrenner und auch dessen Überbrückungsorgan standzuhalten hat, können durchaus unterschiedliche Längenausdehnungen der Zugstangen und des Hohlisolators auftreten, die zu Undichtigkeiten und zu einer deutlichen Verringerung der Spannkräfte in den Zugstangen führen könnten. Mittels des durch die Tellerfedern erzielbaren Dehnungsausgleichs sind diese genannten Gefahren jedoch beherrschbar und auf einfache Weise zu vermeiden.

Eine dem Sicherheitsbedürfnis entgegenkommende Ergänzung der Ausstattung des Überbrückungsorgans ist in der Anordnung eines Überdrucksicherheitsventils zu sehen, dessen Ausblasöffnung nach oben hin ausgerichtet sein soll.

Zwar ist die Gefahr, daß sich im Inneren des Überbrückungsorgans ein unzulässig hoher Überdruck bildet, so gut wie nicht zu erwarten, dennoch aber stellt das Vorhandensein eines solchen Überdrucksicherheitsventils eine vorbeugende Maßnahme dar, um einen darunter vorbeifahrenden Zug oder auch in der Nähe befindliche Personen, beispielsweise das Wartungspersonal, vor irgendwelchen unerwarteten Ereignissen infolge eines unzulässigen Überdruckes im Inneren des Überbrückungsorgans zu schützen.

Schließlich ist eine vorteilhafte Maßnahme in dem Vorschlag zu sehen, im Inneren des Überbrückungsorgans ein Trocknungsmittel anzuordnen, welches der Verringerung des Feuchtegehalts des im Inneren befindlichen Mediums dient. Als besonders geeignetes Trocknungsmittel ist Aktivtonerde zu nennen. Hierzu muß angemerkt werden, daß im Prinzip das Innere des Überbrükkungsorgans hermetisch gegen die Außenatmosphäre verschlossen ist und somit auch keine Luftfeuchtigkeit in den verschlossenen Innenraum eindringen kann. Da es sich bei dem Überbrückungsorgan, was seine äußere Umhüllung betrifft, um ein aus mehreren Einzelteilen zusammengesetztes "Gehäuse" handelt, dessen Einzelteile gegeneinander durch Dichtungselemente abgedichtet sind, kann eine absolute Wasserdampfdichtigkeit über viele Jahre hinweg letztendlich nicht garantiert werden. Es kommt hinzu, daß bewegliche Teile aus dem Inneren des Überbrückungsorgans herausgeführt sind, nämlich Betätigungsgestänge und Anzeigeorgane, die trotz sehr dauerhafter radialer Abdichtungen eine gewisse, wenn auch eine äußerst geringe Menge an Feuchtigkeit bzw. an Wasserdampf passieren lassen. Diese Tatsache läßt es wünschenswert erscheinen, die Anordnung eines Trocknungsmittels im Inneren des Überbrückungsorgans vorzusehen. Durch eine solche Maßnahme erreicht man eine erhöhte Betriebssicherheit bzw. eine erhöhte elektrische Standfestigkeit, nämlich eine trockene Innenatmosphäre trotz einer gewissen unvermeidbaren Wasserdampfleckage von der Außenatmosphäre in das Schalterinnere.

Anhand eines in den Zeichnungen dargestellten Ausführungsbeispieles sowie einiger dargestellter Gestaltungseinzelheiten und der nachfolgenden Beschreibung hierzu sollen der Erfindungsgegenstand und seine vorteilhaften Ausbildungsmöglichkeiten nocheinmal erläutert und verdeutlicht werden.

Es zeigt:
- Figur 1: einen Streckentrenner mit angrenzenden Fahrdrahtabschnitten und Tragseilen,
- Figur 2: in gegenüber Figur 1 vergrößertem Maßstab ein zum Streckentrenner gehöriges Überbrückungsorgan im Längsschnitt,
- Figur 3: einen im Überbrückungsorgan angeordneten Trennschalter,
- Figur 4: eine seitliche Sicht auf das in Figur 2 dargestellte Überbrückungsorgan,
- Figur 5: in gegenüber Figur 2 vergrößertem Maßstab eine nach drei Seiten hin abgebrochene Sicht in das zuvor bereits gezeigte Überbrückungsorgan, und zwar auf einen Leistungsschalter, einen elektromagnetischen Antrieb für diesen Leistungsschalter sowie Einzelheiten eines Verbindungsgestänges und weiterer Zubehör-Organe, wobei sich der Leistungsschalter in seiner AUS-Stellung befindet,
- Figur 6: die in Figur 5 gezeigte Anordnung, hier jedoch in der EIN-Stellung des Leistungsschalters,
- Figur 7: die Ergänzungsmöglichkeit eines Überbrückungsorgans mit einem Vorwiderstand,
- Figur 8: die Anordnung beider Enden einer Zugstange des Überbrückungsorgans in einer gegenüber der Darstellung in Figur 2 weiter vergrößerten Schnittdarstellung und
- Figur 9: die Ausgestaltung und Weiterbildung eines im Überbrückungsorgan angeordneten Trennschalters mit Betätigungsmöglichkeiten für Impuls- und für einen Handbetrieb.

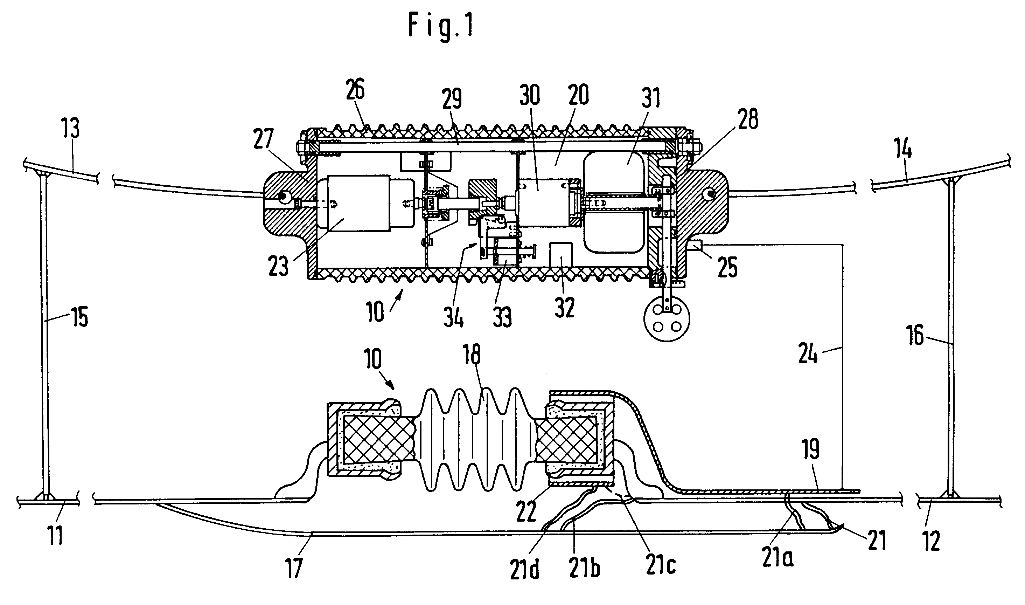

Die **Figur 1** veranschaulicht in teilweise etwas vereinfachter Darstellung eine Trennstelle zwischen zwei Fahrleitungs- oder Streckenabschnitten, zwischen denen ein Streckentrenner 10 angeordnet ist. Der in der Darstellung links gelegene Endabschnitt des Fahrdrahtes ist mit der Ziffer 11 bezeichnet, der rechte Fahrdrahtabschnitt mit der Ziffer 12. Oberhalb der Fahrdrahtabschnitte 11 und 12 sind Tragseilabschnitte 13 und 14 erkennbar. Der Fahrdrahtabschnitt 11 ist über einen Stromverbinder 15 mit dem Tragseilabschnitt 13 und der Fahrdrahtabschnitt 12 über einen Stromverbinder 16 mit dem Tragseilaschnitt 14 verbunden, wobei diese Verbindungen nicht nur mechanischer Art sind, sondern auch elektrisch leitende Verbindungen darstellen, d. h. die Tragseilabschnitte 13 und 14 weisen das gleich Spannungspotential auf wie die ihnen zugeordneten Fahrdrahtabschnitte 11 bzw. 12. Diese beiden Tragseil- und Fahrdrahtabschnitte sind durch den Streckentrenner 10 elektrisch voneinander getrennt, um diese Trennstelle jedoch überfahren zu können, geht vom linken Fahrdrahtabschnitt 11 ein Schleifkufenpaar 17 aus, welches über den (in der Darstellung) linken Endbereich des Fahrdrahtabschnittes 12 hinwegreicht. Von dem Schleifkufenpaar 17 ist übrigens nur eine Schleifkufe sichtbar, da die zweite gleichebenig der ersten Schleifkufe dahinterliegt. Durch dieses Schleifkufenpaar 17 ist gewährleistet, daß ein (nicht gezeigtes) Stromabnehmerschleifstück beim Überfahren des Streckentrenners 10 in jeder beliebigen Fahrstellung mit Spannung versorgt wird, also entweder vom links des Streckentrenners 10 endenden Fahrdrahtabschnitt 11, was also streckenweise über das Schleifkufenpaar 17 erfolgt, oder - beim Verlassen des Schleifkufenpaares 17 in nach rechts gerichteter Fahrtrichtung - vom benachbarten Fahrdrahtabschnitt 12.

Der Streckentrenner 10, welcher also - wie eben bereits gesagt - der elektrischen Trennung einander benachbarter Abschnitte einer elektrischen Fahrleitung für Triebfahrzeuge dient, besteht im wesentlichen aus zwei voneinander getrennten Organen, nämlich einem Trennisolator 18 mit einer von diesem ausgehenden, den Fahrdrahtabschnitt 12 streckenweise überwölbenden, gegen den Fahrdraht jedoch isolierten Hilfselektrode 19 und aus einem darüber angeordneten, an den beiden Tragseilabschnitten 13 und 14 aufgehängten Überbrückungsorgan 20.

Wie bereits eingangs der Beschreibung erläutert und auch dem bekannten Stand der Technik zu entnehmen ist, bildet sich zwischen dem Schleifkufenpaar 17 und dem Fahrdrahtabschnitt 12 beim Überfahren - jedenfalls dann, wenn zwischen den einander benachbarten Fahrdrahtabschnitten 11 und 12 ein mehr oder weniger unterschiedliches Potential, oder unter Umständen auch dann, wenn eine deutliche Phasenverschiebung zueinander bei den beiden Netzen der Fahrdrahtabschnitte 11 und 12 vorliegt - ein Lichtbogen 21, welcher bereits nach kurzer Zeit zur Hilfselektrode 19 kommutiert, siehe den mit 21a bezeichneten Lichtbogen. Etwa diese Lage nimmt der Lichtbogen 21 bzw. 21a ein, wenn das Stromabnehmerschleifstück den Streckentrenner 10 von - bezogen auf die Darstellung - links nach rechts hin überfährt. Bei entgegengesetzter Fahrtrichtung wird der Lichtbogen 21 vom freien Ende des Schleifkufenpaares 17 hin in Richtung des Fahrdrahtabschnittes 11 wandern, bis er die mit der Ziffer 21b bezeichnete Lage einnimmt, um sodann - siehe 21c - zur Hilfselektrode 19 bzw. zu deren rohrartigem Schaft 22 zu kommutieren und schließlich die mit 21d gezeigte Lage einzunehmen. Die Spannungsdifferenz, die zwischen dem Potential des Fahrdrahtabschnittes 12 und der Hilfselektrode 19 auftritt, dient als Speisespannung für den Betrieb des Überbrückungsorgans 20, dessen Antriebsorgane also die Betätigung eines Leistungsschalters 23 im Inneren des Überbrückungsorgans 20 bewirken. Diese Speisespannung wird dem Überbrückungsorgan 20 über eine von der Hilfselektrode 19 ausgehende Leitung 24, die einer isolierten Durchführung 25 am Überbrückungsorgan 20 zugeleitet wird, und im übrigen vom rechten Tragseilabschnitt 14 zugeführt.

Was seine äußere Umhüllung betrifft, so ist das Überbrückungsorgan 20 als Hohlisolator ausgebildet, welch letzterer sich im wesentlichen aus einem hohlzylindrischen Isolierrohr 26 und beidendig an diesem Isolierrohr direkt oder indirekt dichtend anliegenden Verschlußdekkeln 27 und 28 zusammensetzt. Diese Verschlußdeckel 27 und 28 sowie das dazwischenliegende hohlzylindrische Isolierrohr 26 werden mittels im vorliegenden Falle dreier Zugstangen (sichtbar in der Darstellung ist nur eine der Zugstangen, die mit der Ziffer 29 versehen ist) und entsprechenden Schraubelementen, die hier im einzelnen nicht erläutert werden sollen und auch nicht beziffert sind, zusammengehalten. Hierbei durchdringen, wie erkennbar, die Zugstangen 29 die beiden Verschlußdeckel 27 und 28. Hierzu sei angemerkt, daß die Zugspannung jeder einzelnen Zugstange 29 größer ist als die zu erwartende gesamte Zugspannung am zwischen den Tragseilen 13 und 14 eingespannten Überbrückungsorgan 20 bzw. dessen Verschlußdeckeln 27 und 28. Auf diese Weise ist gewährleistet, daß die besagten Verschlußdeckel 27 und 28 auch dann dichtend an das hohlzylindrische Isolierrohr 26 gepreßt werden, wenn die äußeren Zugspannungen über die Tragseilabschnitte 13 und 14 vorübergehend deutlich größer werden als im Ruhezustand des gesamten Streckentrenners 10, beispielsweise durch Bewegungen dieser Tragseilabschnitte infolge von Sturmeinflüssen oder dergleichen.

Im Inneren des eben beschriebenen Hohlisolators befinden sich außer dem bereits genannten Leistungsschalter 23 und dessen elektromagnetischem Antrieb in Gestalt eines Hubmagneten 30 auch noch ein Sättigungsstromwandler 31 mit - schaltungsmäßig gesehen - nachgeordneten, in einer Kapselung 32 angeordneten elektronischen Kondensatorschaltungen, die insbesondere einer Ansprechverzögerung und sodann einer Einschaltunterstützung dienen (die Kapselung 32 ist in der Darstellung nur symbolisiert angedeutet), weiterhin eine von einem Haltemagneten 33 betätigbare Sperrvorrichtung 34 und schließlich ein - in dieser Darstellung nicht sichtbarer - Trennschalter, dessen Schaltstellung mittels einer aus dem Überbrückungsorgan 20 bzw. aus einem Verschlußorgan seines Hohlisolators herausgeführten, manuell betätigbaren Antriebswelle veränderbar ist. Auch diese Antriebswelle ist in dieser Darstellung nicht sichtbar.

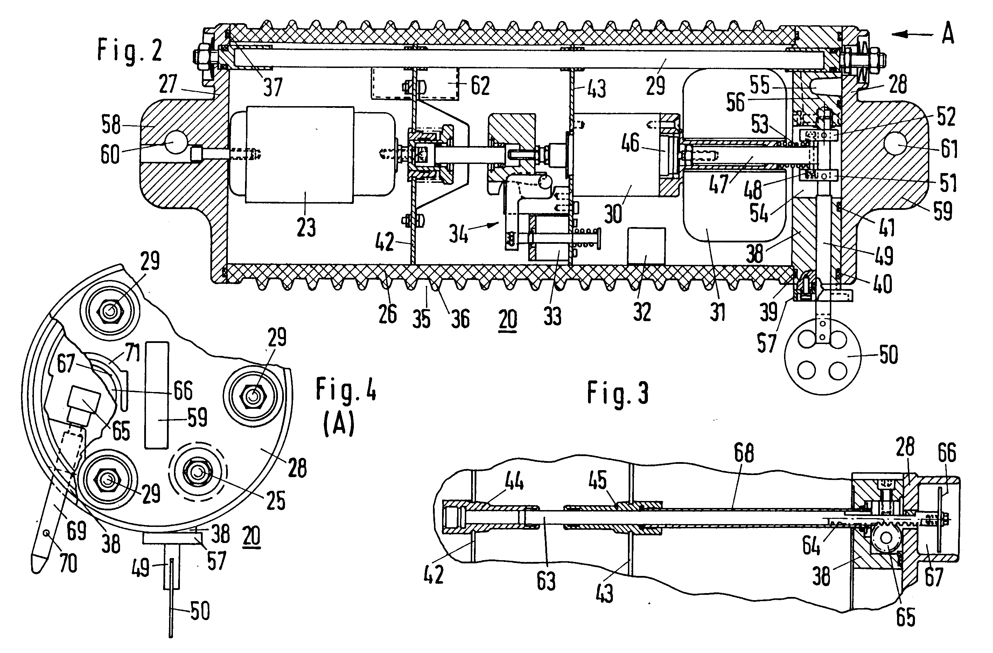

In der **Figur 2** ist das soeben erläuterte Überbrückungsorgan 20 noch einmal in gleicher Schnittdarstellung zu sehen, nun jedoch im Maßstab deutlich vergrößert gezeigt. Es ist erkennbar, daß das hohlzylindrische Isolierrohr 26, welches übrigens aus einem witterungsbeständigen Gießharz besteht, sehr wohl aber auch aus Glas oder aus einem keramischen Material, beispielsweise aus Porzellan bestehen könnte, auf seiner äußeren Mantelfläche zur Kriechstreckenverlängerung mit einer großen Anzahl umlaufender Nuten 35 vergleichsweise geringer Tiefe versehen ist, zwischen denen somit umlaufende Rippen 36 gebildet sind. Diese äußere Formgebung des Isolierrohres 26 dient der Verlängerung der Kriechstrecken, wie dieses bei Isolatoren bekannt und üblich ist, verglichen jedoch mit bekannten Anordnungen ist hier die Durchmesserdifferenz zwischen dem Nutgrund und dem äußeren Durchmesser der Rippen recht gering, dafür ist die Anzahl der Nuten und Rippen groß.

Das Innere des hohlzylindrischen Isolierrohres 26 ist zur Außenatmosphäre hin druckdicht und auch unterdruckdicht gekapselt, und zwar mittels Dichtelementen, welche in den Verschlußorganen 27, 28 an den Längsenden des Isolierrohres 26 angeordnet sind. An dem in der Darstellung nach links weisenden Ende des Isolierrohres 26 befindet sich der bereits erwähnte Verschlußdeckel 27, welcher an seiner zum Isolierrohr 26 gerichteten Fläche, nahe seiner äußeren Randung, eine umlaufende Dichtung 37 enthält, die in einer entsprechenden Nut dieses Verschlußdeckels 27 eingebettet ist und sich an die Stirnseite des Isolierrohres 26 preßt. An dem entgegengesetzten Längsende des hohlzylindrischen Isolierrohres 26 befindet sich der andere Verschlußdeckel 28, welcher aber hier kombiniert ist mit einem Zwischenstück 38 und zusammen mit diesem das Isolierrohr 26 verschließt. Hierfür sind beidseitig des Zwischenstückes 38 umlaufende Dichtungen angeordnet, und zwar auf der zum Isolierrohr 26 weisenden Fläche eine Dichtung 39 und auf der entgegengesetzten, zum Verschlußdeckel 28 gerichteten Fläche Dichtungen 40 und 41. Dieses Zwischenstück 38, auf dessen Bedeutung nachfolgend noch eingegangen werden soll, wird, wie ersichtlich, ebenfalls von den Zugstangen 29 durchdrungen und von diesen mit verspannt.

Im Inneren des Isolierrohres 26 sind eine erste Tragscheibe 42 und - in der Darstellung rechts von dieser - eine zweite Tragscheibe 43 angeordnet und befestigt. Diese Tragscheiben 42 und 43 dienen vordergründig der Abstützung und Halterung von im Hohlisolator aufgenommenen Funktionsorganen, außerdem aber können sie gleichzeitig auch der Stromleitung dienen. Zwischen dem Verschlußdeckel 27 und der ersten Tragscheibe 42 befindet sich der bereits erwähnte Leistungsschalter 23, dessen einer Schaltpol leitend mit dem Verschlußdeckel 27 und dessen anderer Pol leitend mit der ersten Tragscheibe 42 verbunden ist. Auf der vom Leistungsschalter 23 abgekehrten Seite der ersten Tragscheibe 42, zwischen dieser und der zweiten Tragscheibe 43, befinden sich ein nachfolgend noch zu erläuterndes, wenigstens teilweise aus Isoliermaterial bestehendes Verbindungsgestänge, welches den Leistungsschalter 23 mit dem oben bereits erwähnten Hubmagneten 30 verbindet, und der ebenfalls bereits genannte Haltemagnet 33 mit der von diesem zu betätigenden Sperrvorrichtung 34. Außerdem sind zwischen diesen beiden Tragscheiben 42 und 43 auch noch Kontaktbuchsen 44 und 45 gelegen, die zwar in dieser Darstellung in Figur 2 nicht erkennbar, wohl aber der nachfolgend noch zu beschreibenden Figur 3 zu entnehmen sind.

Schließlich zur Bestückung desjenigen Längsbereiches des Isolierrohres 26, welches sich zwischen der zweiten Tragscheibe 43 und dem Zwischenstück 38 befindet. In diesem Raumbereich sind - wie bereits erwähnt - der Hubmagnet 30 angeordnet und an der zweiten Tragscheibe 43 befestigt, weiterhin der bereits erwähnte Sättigungsstromwandler 31 und die mehr symbolisch als wirklichkeitsgetreu angedeutete Kapselung 32 für die elektronischen Kondensatorschaltungen. Wesentlich zu erwähnen ist, daß der etwa zylinderförmig ausgebildete Anker 46 des Hubmagneten 30 nicht nur in Richtung des Leistungsschalters 23 hin aus einem Gehäuse des Hubmagneten 30 herausgeführt ist, sondern auch in entgegengesetzter Richtung, und hier mit einer Zugstange 47 verbunden ist. Das freie Ende dieser Zugstange 47 ist mit einem Querstift 48 ausgestattet, dessen beide Enden deutlich über dem Außendurchmesser der Zugstange 47 vorstehen. Diese Zugstange 47 dient der Betätigung einer Vorrichtung zur Schaltstellungsanzeige, welche sich im wesentlichen aus einer Schaltwelle 49 sowie einer Anzeigescheibe 50 zusammensetzt. An ihrem in der Darstellung nach oben gerichteten Längsbereich ist die Schaltwelle 49 mit zwei Betätigungshebeln 51 und 52 fest verbunden, in denen jeweils eine Längsnut oder ein Längsschlitz angeordnet sind, in welche die Enden des bereits genannten Querstiftes 48 eingreifen. Bei Veränderung der Lage des Ankers 46 und somit auch der Zugstange 47 vermögen die Stiftenden des Querstiftes 48 die Schaltwelle 49 nach Art eines Triebstockes zu verdrehen, beispielsweise um einen Betrag von 45 Winkelgraden. Diese Drehbewegung der Schaltwelle 49 wird im Ausschaltfalle, d. h. wenn der Anker 46 von der in der Figur dargestellten Einschaltlage in seine Ausschaltlage zurückkehrt und somit die Zugstange 47 (bezogen auf die Darstellung) nach rechts hin verschoben wird, unterstützt von einer Druckfeder 53 mit flacher Federcharakteristik.

Ein Teil dieser eben genannten Druckfeder 53, das in der Darstellung nach rechts weisende Ende der Zugstange 47, die beiden Betätigungshebel 51 und 52 sowie das in der Darstellung nach oben gerichtete Ende der Schaltwelle 49 sind in einer Ausnehmung 54 des bereits genannten Zwischenstückes 38 angeordnet, welche noch einen Bestandteil des hermetisch abgedichteten Innenraumes des Hohlisolators bildet. Die Schaltwelle 49 wird von diesem abgedichteten Raum nach außen geführt, wobei die Durchtrittsstelle durch das Zwischenstück 38 mittels wenigstens einer (in der Darstellung nicht gezeigten) Radialdichtung druckdicht und auch unterdruckdicht abgedichtet ist. Ein bogenförmig verlaufender Außenraum 55, der gegen die Außenatmosphäre nicht oder jedenfalls nicht druckfest abgedichtet, gegen Witterungseinflüsse jedoch weitgehend geschützt ist, könnte auch ringförmig ausgebildet sein und einen Streckenabschnitt der Schaltwelle 49 umgeben, wie dieses in der Figur 1 angedeutet ist.

Die äußere Durchdringungsstelle der Schaltwelle 49 im Zwischenstück 38 ist von einem Tropfteller 57 mit einer äußeren, umlaufenden Abtropfkante umgeben. Hierdurch soll nicht nur das Eindringen von Regenwasser in die Durchdringungsstelle weitgehend vermieden werden, sondern darüberhinaus auch eine Eisbildung im Durchführungsbereich der Schaltwelle 49. Je nach Stellung der Anzeigescheibe 50 kann somit von außen her erkannt werden, in welch einer Schaltstellung sich der Hubmagnet 30 und somit auch der Leistunsschalter 23 befinden, wobei anzumerken ist, daß die Einschaltstellung stets nur eine ganz kurze Zeit lang gegeben ist und somit normalerweise immer die Ausschaltstellung angezeigt wird.

Im Zusammenhang mit der Figur 2 sind aber noch weitere Gestaltungseinzelheiten zu erwähnen, nämlich beispielsweise die Ausgestaltung der Verschlußdeckel 27 und 28. Wie erkennbar, weisen sie in ihrer Grundform eine plattenartige Gestalt auf, aus welcher - etwa im mittigen Bereich - dann aber vorspringende Ohren 58 und 59 austreten. In diesen Ohren 58 und 59 sind jeweils eine Einhängeöffnung 60 bzw. 61 angeordnet, welche der Aufhängung des ganzen Überbrückungsorgans 20 zwischen zwei Tragseilabschnitten dienen, siehe hierzu die Tragseilabschnitte 13 und 14 in der Figur 1. Bemerkenswert ist, daß sich diese Einhängeöffnungen 60 und 61 keinesfalls in Höhe der Mittelachse des Überbrückungsorgans 20 bzw. von dessen hohlzylindrischem Isolierrohr 26 befinden, sondern erkennbar oberhalb dieser (nicht bezifferten) Mittelachse, die im vorliegenden Falle wenigstens angenähert auch die in Längsrichtung verlaufende Schwerachse des Überbrückungsorgans bildet. Diese Anordnung der Einhängeöffnungen 60 und 61 begünstigt sehr wesentlich eine Stabilisierung des Überbrückungsorgans 20 bezüglich seiner Sollage, und zwar auch dann, wenn von einem der beiden Tragseilabschnitte 13 oder 14 oder gar von beiden Tragseilabschnitten ein gewisses Drehmoment auf das Überbrückungsorgan 20 ausgeübt wird, was sehr wohl infolge der Verdrillung der Tragseile geschehen kann, bei dieser Art der Aufhängung aber nicht "wegjustiert" werden muß.

Es ist bereits gesagt worden, daß das Innere des Überbrückungsorgans 20 druckdicht und auch unterdruckdicht gekapselt ist und darüberhinaus mit einem vorzugsweise gasförmigen Isoliermedium angefüllt sein kann, welches günstigere Isolationseigenschaften aufweist als das Medium "Luft", nämlich insbesondere Schwefelhexafluorid (SF₆). Hierfür ist es zweckmäßig oder aus Gründen einer Nachfüllmöglichkeit sogar zwingend notwendig, das Überbrückungsorgan 20 mit einer Einfüllvorrichtung bzw. mit einem Füllventil auszustatten. Ein solches Füllventil, beispielsweise nach Art eines Schlauchventils, wie es bei der Kraftfahrzeugbereifung Verwendung findet, kann vorteilhafterweise in einem der Verschlußdeckel 26 oder 27 angeordnet sein. Darüberhinaus kann es zweckmäßig sein, auch ein Überdrucksicherheitsventil vorzusehen, um das Überbrückungsorgan 20 vor einer Beschädigung im Falle der Ausbildung eines unzulässigen Überdruckes in seinem Inneren zu bewahren und auch um das Wartungspersonal bei derartigen (zwar kaum möglichen, jedoch nie absolut auszuschließenden) Störfällen zu schützen. Hierbei ist es zweckmäßig, die Ausblasöffnung eines solchen Überdrucksicherheitsventils so vorzusehen, daß die Ausblasrichtung nach oben hin ausgerichtet ist. Beide eben angesprochenen Organe, nämlich das Einfüllventil und auch ein Überdrucksicherheitsventil, sind weder der Figur 2 noch den anderen Darstellungen zu entnehmen. Eine geeignete Positionierung (vorgeschlagen wurde bereits, sie an einem der Verschlußdeckel anzuordnen) bereitet dem einschlägigen Fachmann jedoch keine besonderen Schwierigkeiten.

Ebenfalls erwähnt wurde bereits die Möglichkeit, im Inneren des Überbrückungsorgans 20 ein Trocknungsmittel zur Minimierung des Feuchtegehalts anzuordnen, beispielsweise Aktivtonerde. Hierfür empfiehlt es sich, einen besonderen Käfig vorzusehen, dessen Lage innerhalb des Überbrückungsorgans 20 an sich beliebig ist, d. h. in erster Linie davon abhängt, wo ein entsprechener Raum zur Verfügung steht und die zu beachtenden elektrischen Abstandsverhältnisse es gestatten. In der Figur 2 ist ein solcher Käfig im Bereich der ersten Tragscheibe 42 angedeutet und mit der Ziffer 62 bezeichnet worden.

Nun zur **Figur 3.** Diese veranschaulicht einen nur teilweise dargestellten Schnitt durch das Überbrückungsorgan 20 gemäß Figur 2, dieser Schnitt weist jedoch eine andere Schnittebene auf als dieses bei der Figur 2 der Fall ist. Wie erkennbar, durchdringen die beiden bereits erwähnten Kontaktbuchsen 44 und 45 die Tragscheiben 42 und 43 und sind mit diesen zugleich auch elektrisch leitend verbunden. Sie sind Bestandteil eines Trennschalters, welcher außer den besagten Kontaktbuchsen 44 und 45 noch aus einem Schubkontaktstift 63 besteht, mittels welchem - gemäß der in Figur 3 dargestellten Schaltlage - die beiden Kontaktbuchsen 44 und 45 leitend miteinander verbindbar sind. Dieser Schubkontaktstift 63 erstreckt sich mit seinem den Kontaktbuchsen 44 und 45 abgewandten Ende in denjenigen Raumbereich des Isolierrohres 26 hinein, welcher zwischen der zweiten Tragscheibe 43 und dem Zwischenstück 38 gebildet ist, durchdringt sodann dieses Zwischenstück 38 und schließlich auch noch den Verschlußdeckel 28. Im das Zwischenstück 38 durchdringenden Längsbereich ist der Schubkontaktstift 63 mit einer linearen Verzahnung 64 versehen, welche mit einem Ritzel 65 zusammenwirkt, das im Zwischenstück 38 gelagert und mittels einer Antriebswelle, mit der es fest verbunden ist, verdrehbar ist. Hierdurch ist der Schubkontaktstift 63 in längsaxialer Richtung verschiebbar, d. h. aus seiner in der Figur 3 dargestellten Schließstellung, in welcher - wie erwähnt - die beiden Kontaktbuchsen 44 und 45 kontaktierend miteinander verbunden sind, in eine Trennstellung überführbar, in welcher sich zwischen den beiden Kontaktbuchsen 44 und 45 eine Trennstrecke bildet. Am in der Darstellung äußersten rechten Ende des Schubkontaktstiftes 63 ist eine Signalscheibe 66 befestigt, die sich in der dargestellten geschlossenen Stellung des Trennschalters deutlich innerhalb einer Nische 67 befindet, welch letztere am Verschlußorgan 28 angeformt und nach außen hin offen ist. Übrigens läßt sich der Schubkontaktstift 63 noch weiter hinein in die Kontaktbuchse 44 verschieben, was zur Folge hat, daß die Signalscheibe 66 bis nahe an den Grund der Nische 67 geführt ist. Wird der Schubkontaktstift 63 in seine Trennstellung gebracht, so verschiebt sich auch die Signalscheibe 66 zwangsweise aus der Nische 67 heraus, bis sie deutlich außerhalb der Nische 67 gelegen und gut sichtbar ist. Nicht unerwähnt bleibe, daß der Schubkontaktstift 63 in demjenigen Längsbereich, welcher sich zwischen der zweiten Tragscheibe 43 und dem Zwischenstück 38 befindet, innerhalb eines Schutzrohres 68 angeordnet ist, was weniger zur Führung des Schubkontaktstifes 63 dient, sondern vielmehr mit einer günstigen Abdichtungsmöglichkeit zusammenhängt.

Die **Figur 4** veranschaulicht eine Ansicht A auf das Überbrückungsorgan 20, und zwar in Richtung des Pfeiles A in der Figur 2. Erkennbar sind der Verschlußdeckel 28 mit seinem vorspringenden Ohr 59, die herausgeführten Enden von drei Zugstangen 29 sowie die im Zusammenhang mit den Erläuterungen zur Figur 1 bereits erwähnte isolierte Durchführung 25 für die von der Hilfselektrode 19 ausgehende Leitung 24, siehe auch hierzu die Figur 1. Unterhalb des Verschlußdeckels 28 kragt ein kleiner Bereich des Zwischenstückes 38 hervor, wovon insbesondere der bereits genannte Tropfteller 57 sichtbar ist. Aus diesem wiederum tritt die Schaltwelle 49 heraus, die mit der Anzeigescheibe 50 verbunden ist.

Der in der Darstellung links gelegene Bereich des Verschlußdeckels 28 ist teilweise abgebrochen gezeigt, so daß das Ritzel 65 für den Antrieb des bereits erläuterten Trennschalters sichtbar wird. Dieses Ritzel 65 ist mit einer bereits erwähnten, nunmehr aber sichtbaren Antriebswelle 69 fest verbunden. Wie erkennbar, durchragt diese Antriebswelle 69 das Zwischenstück 38 (ähnlich wie dieses bei der Schaltwelle 49 für die Schaltstellungsanzeige der Fall ist) und ist hier nahe ihres nach unten gerichteten Endes mit einem Querbolzen 70 ausgestattet. Dieser Querbolzen 70 dient der Betätigung der Antriebswelle 69, was mittels einer Erdungsstange erfolgen kann. Mindestens streckenweise isolierte Erdungsstangen gehören zum Werkzeugsortiment des Wartungspersonals für Fahrleitungen der hier zur Rede stehenden Art und eignen sich unter anderem auch für die Betätigung der eben genannten Antriebswelle 69 für den Trennschalter. Es wird also kein gesondertes Werkzeug für die Bedienung des Trennschalters benötigt, was zweifellos ein Vorteil ist.

Schließlich sind in dieser Figur 4 noch - großenteils abgebrochen - die Signalscheibe 66 und ein Wandungsbereich 71 der Nische 67 erkennbar, in welcher die Signalscheibe 66 je nach Schaltstellung mehr oder weniger verborgen bzw. eingetaucht ist.

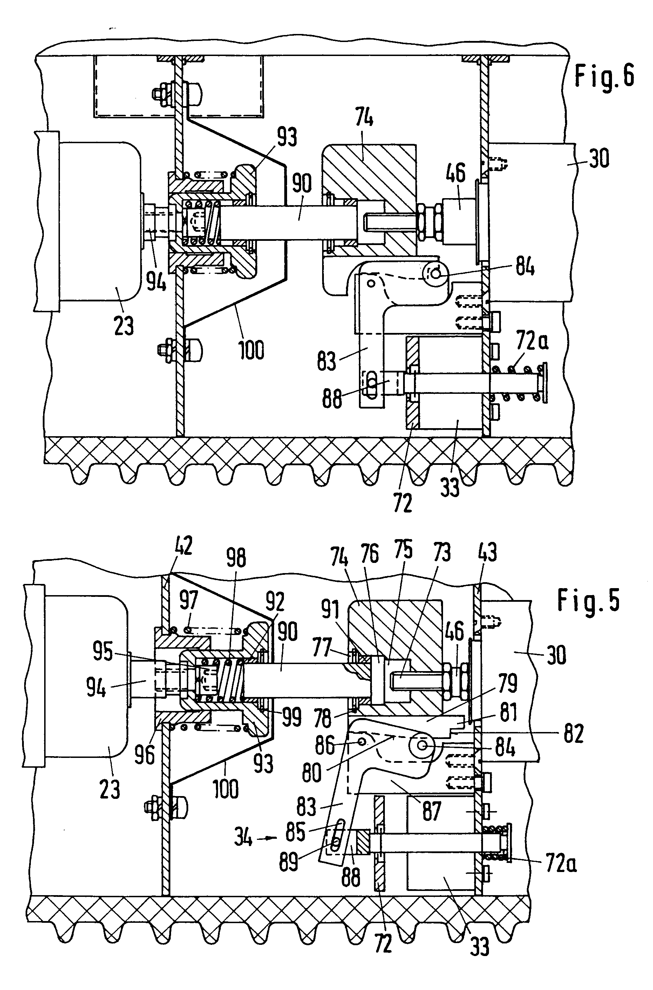

Nachfolgend sollen die Einzelheiten des Verbindungsgestänges zwischen dem Hubmagneten 30 und dem Leistungsschalter 23 sowie der damit zusammenwirkenden Sperrvorrichtung 34 näher erläutert werden, und zwar anhand der **Figuren 5 und 6.** Diese beiden, nach drei Seiten hin abgebrochen gezeigten Darstellungen veranschaulichen das Verbindungsgestänge in einem gegenüber den zuvor erläuterten Figuren 2 bis 4 deutlich vergrößertem Maßstab. Hierbei zeigt die Figur 5 die genannten Organe in ihrer AUS-Stellung, die Figur 6 hingegen zeigt die Einschaltstellung der angesprochenen Organe. Bereits ausgeführt worden ist, daß sich sowohl das wenigstens teilweise aus Isoliermaterial bestehende Verbindungsgestänge als auch die Sperrvorrichtung 34 zwischen den beiden Tragscheiben 42 und 43 befinden. Erkennbar sind ein kleiner Teil des Hubmagneten 30 und, ihm gegenüber, ein kleiner Teil des Leistungsschalters 23. Der Anker 46 des Hubmagneten 30 ist mit einem der Justierung dienenden Gewindestück 73 verbunden, welch letzteres ein Schwunggewicht 74 mit dem Anker 46 starr verbindet. Dieses Schwunggewicht 74 ist in seiner Mitte durchbohrt und nach einem Gewindeabschnitt, in dem sich das Gewindestück 73 befindet, mit einer ersten Erweiterung 75, sodann mit einer im lichten Durchmesser größeren, zweiten Erweiterung 76 und schließlich mit einer dritten Erweiterung 77 versehen, wobei in der letztgenannten Erweiterung 77 eine in axialer Richtung wirkende Sicherungsscheibe 78 aufgenommen ist. In seinem in der Darstellung nach unten gerichteten Bereich weist das Schwunggewicht 74 zwei Ausfräsungen 79 auf, an deren beiden inneren Seitenrandungen Führungsflächen 80 und - in einem vorstehenden Absatz 81 - Verriegelungsflächen 82 vorgesehen sind. Diese eben benannten Ausgestaltungen wirken mit einem Winkelhebel 83 zusammen, welcher am freien Ende seines kürzeren Hebelarms beiderseits vorstehende Rastglieder 84 in Gestalt eines gelagerten Stiftes oder einer kleinen Rolle enthält, am Ende seines längeren Hebelarms ein Langloch 85 enthält und im übrigen um eine Achse 86 in einem gewissen Umfang schwenkbar gelagert ist. Diese Achse 86 befindet sich in einem Lagerklotz 87, welcher an der Tragscheibe 43 befestigt ist. Im Bereich des Langloches 85 ist der Winkelhebel 83 mit einem Gabelstück 88 gelenkig und zugleich verschieblich verbunden, welches seinerseits einen Bestandteil des Ankers 72 des Haltemagneten 33 bildet oder mit diesem Anker fest verbunden ist. Die genannte Verbindung zwischen dem Winkelhebel 83 und dem Gabelstück 88 wird durch einen Mitnehmerstift 89 bewirkt. Nicht unerwähnt bleibe, daß zwischen dem Anker 72 und dem (nicht bezifferten) Kern des Haltemagneten 33 eine (nicht angedeutete) dünne Folie angeordnet ist, welche ein "Kleben" des Ankers 72 verhindert, darüber hinaus aber auch einen gewissen Einfluß ausübt auf die Einschaltdauer des Haltemagneten 33, d. h. auf die Impulszeit. Soviel zu den besonderen Ausbildungen der Sperrvorrichtung 34.

In die bereits erwähnte zweite Erweiterung 76 im Schwunggewicht 74 ragt das Ende eines aus Isoliermaterial bestehenden Stößels 90 hinein, welcher an diesem Endbereich mit einem aufgepreßten, metallischen Ring 91 versehen ist. Am entgegengesetzten Ende des Stößels 90 ist ebenfalls ein weiterer Ring 92 aufgepreßt. Dieses letztgenannte Ende des Stößels 90 ragt in ein Buchsenorgan 93 hinein, welches an seinem in der Darstellung nach links weisenden Endbereich mit dem beweglichen Kontaktstößel 94 des Leistungsschalters 23 fest - nämlich mittels eines Schraubelementes 95 - verbunden ist. Das Äußere des Buchsenorgans 93 lagert in einer Kontaktbuchse 96, die in der ersten Tragscheibe 42 fest und kontaktierend gehalten, beispielsweise eingepreßt ist. Diese Kontaktbuchse 96 dient nicht nur der Führung des Buchsenorgans 93, sondern auch der Kontaktierung zwischen diesen beiden Teilen.

Von wesentlicher Bedeutung sind zwei Federorgane, nämlich eine Rückstellfeder 97 und eine Kontaktdruckfeder 98. Die Rückstellfeder 97 stützt sich an der ersten Tragscheibe 42 ab und umgibt den Schaft der Kontaktbuchse 96. Das andere Ende dieser Rückstellfeder 97 stützt sich an einem umlaufenden Absatz des Buchsenorgans 93 ab und wird hier auch mittels eines kurzen, im Durchmesser verringerten Absatzes in seiner Lage fixiert. Die Kontaktdruckfeder 98 umgibt den Kopf des Schraubenelementes 95, stützt sich an diesem Längsende an der Schraubfläche des Buchsenorgans 93 ab und druckt mit ihrem anderen Längsende auf den Ring 92 am Stößel 90. Eine radial umlaufende Sicherungsscheibe 99, die in einer Erweiterung am in der Darstellung nach rechts weisenden Ende des Buchsenorgans 93 angeordnet ist, verhindert es, daß der Stößel 90 mit seinem Ring 92 weiter als dargestellt aus dem Buchsenorgan 92 herausgedrückt wird, was zur Folge hat, daß die Kontaktdruckfeder 98 unter einer Vorspannung in ihrer dargestellten Lage steht.

Zu nennen ist schließlich ein Begrenzungsanschlag 100, der als Bügel mit einer etwa trapezförmigen Gestalt ausgebildet und an der ersten Tragscheibe 42 - wie erkennbar - mittels Schraubelementen befestigt ist. Dieser Begrenzungsanschlag 100 dient einer Begrenzung des Ausschalthubes des Kontaktstößels 94, d. h. die Rückstellfeder 97 drückt das Buchsenorgan 93 unter Mitnahme des Kontaktstößels 94 beim Ausschaltvorgang bis in die dargestellte Position, wobei das Buchsenorgan 93 an den Begrenzungsanschlag 100 anschlägt. Dieser Begrenzungsanschlag 100 federt beim Auftreffen des Buchsenorgans 93 wenigstens geringfügig aus, so daß er beim Ausschaltvorgang eine dämpfende Wirkung auf das System ausübt.

Wie oben bereits angedeutet, veranschaulicht die Figur 5 die Ausschaltstellung des soeben erläuterten Gestänges und auch der Sperrvorrichtung 34. Beim Auftreten eines Lichtbogens, wie dieses im Zusammenhang mit der Figur 1 erläutert worden ist, werden der Hubmagnet 30 und auch der Haltemagnet 33 (letzterer um eine geringe, jedoch genau definierte Zeitspanne verzögert, was durch die besagte elektronische Baugruppe in der Kapselung 32 erzielbar ist) mit Spannung versorgt. Hierdurch wird der Anker 46 des Hubmagneten 30 - gegen die Kraft eines Federorgans, nämlich der Druckfeder 53, die in Figur 2 gezeigt ist - in seine Einschaltstellung bewegt, wobei er zunächst das Schwunggewicht 74 in Richtung des Leistungsschalters 23 bewegt. Der Stößel 90 verbleibt zunächst noch in seiner dargestellten Ruhelage, bis nämlich der Absatz zwischen der ersten Erweiterung 75 und der zweiten Erweiterung 76 im Schwunggewicht 74 an den Ring 91 stößt. Beim weiteren Bewegungsvorgang wird nun auch der Stößel 90 in Richtung auf den Leistungsschalter 23 hin bewegt, wobei sich die Rückstellfeder 97 zusammendrückt, bis nämlich der Kontaktstößel 94 seine Einschaltlage erreicht hat. Nun erst wird auch die vorgespannte Kontaktdruckfeder 98 weiter zusammengedrückt und so der erforderliche Kontaktdruck im Inneren des Leistungsschalters 23 aufgebaut. Dieser Bewegungsablauf wird durch das Schwunggewicht 74 und zusätzlich durch eine Kondensatorschaltung, die übrigens auch dann noch wirkt, wenn die Stromzufuhr zum Sättigungsstromwandler 31 (siehe Figuren 1 und 2) infolge der Einschaltung des Leistungsschalters 23 unterbrochen ist, sehr unterstützt, allerdings vermögen der Hubmagnet 30 und die Kondensatorschaltung diese Kontaktkraft nicht aufrechtzuerhalten. Hierfür dient vielmehr die Sperrvorrichtung 34, bei welcher sich während des eben erläuterten Bewegungsablaufes folgender Funktionsablauf ergibt: Gleichzeitig mit dem Hubmagneten 30 oder, wie oben angedeutet: geringfügig verzögert, wird auch der Haltemagnet 33 mit Spannung versorgt. Hierdurch wird sein Anker 46 mitsamt dessen Gabelstück 88 mit einer Kraft beaufschlagt, die in entgegengesetzter Richtung des Ankers 46 vom Hubmagneten 30 wirkt. Der Mitnehmerstift 89 am Gabelstück 88 überträgt die eben geschilderte Kraft auf den Winkelhebel 83 und versucht diesen - um die Achse 86 - im Gegenuhrzeigersinn zu verdrehen. Dieses ist erst möglich, wenn das Schwunggewicht 74 so weit in seine Einschaltlage geführt ist, daß die Rastglieder 84 auf die Verriegelungsflächen 82 gelangen können. Dieses geht einher mit einer Verdrehung des Winkelhebels 83 in seine in der Figur 6 gezeigte Lage. Dieser Bewegungsablauf wird durch eine Ankerschließfeder 72a beeinflußt und unterstützt, wozu erwähnt werden muß, daß nur durch diese Ankerschließfeder 72a der Haltemagnet 33 mit niedrigen Stromwerten zu betreiben ist. In dieser Raststellung, in welcher also der Winkelhebel 83 durch den Haltemagneten 33 kraftmäßig im Gegenuhrzeigersinn beaufschlagt wird und die Rastglieder 84 auf den Verriegelungsflächen 82 ruhen, ist das übrige zwischen dem Hubmagneten 30 und dem Leistungsschalter 23 befindliche Verbindungsgestänge in seiner Einschaltlage gemäß Figur 6 gefesselt und auch der aufgebaute Kontaktdruck im Leistungsschalter 23 bleibt erhalten. Erst wenn der Haltemagnet 33 infolge des Schließens der Kontakte im Leistungsschalter 23 - demgegenüber etwas verzögert - stromlos wird, werden das Gabelstück 88 mitsamt dem daran angeordneten Anker 72 wieder in ihre Ausgangsstellung geführt. Dieses geschieht folgendermassen: bei stromlosem Haltemagneten 33 wird der Winkelhebel 83 nicht mehr mit der vorher wirksam gewesenen Kraft im Gegenuhrzeigersinn beaufschlagt, so daß die Kräfte der Kontaktdruckfeder 98 und der Rückstellfeder 97 die Rastglieder 84 von den Verriegelungsflächen 92 wegdrükken, bis sie auf die Führungsflächen 80 gelangen. Der Winkelhebel 83 wird dadurch in seine in Figur 5 gezeigte Lage im Uhrzeigersinn zurückbewegt, wobei er die Ankerschließfeder 72a spannt. Da nun auch der Hubmagnet 30 stromlos geworden ist, wird das ganze Gestänge zwischen dem Hubmagneten 30 und dem Leistungsschalter 23 ebenfalls infolge der Wirkung der Kontaktdruckfeder 98 und der Rückstellfeder 97, aber auch infolge der Wirkung der vorhin bereits erwähnten Druckfeder 53 (in Figur 2 zu sehen) in die in der Figur 5 gezeigte Ausgangslage zurückgeführt, wobei das Buchsenorgan 93 am Begrenzungsanschlag 100 anschlägt. Angemerkt hierzu sei es, daß der Anker 46 des Hubmagneten 30 sowie auch das Schwunggewicht 74 - wie auch beim Einschaltvorgang - eine größere Wegstrecke zurücklegen als der Stößel 90, und dieser Stößel 90 wiederum legt - infolge der Wirkung der Kontaktdruckfeder 98 - eine größere Wegstrecke zurück als der Kontaktstößel 94 des Leistungsschalters 23.

Erwähnt in diesem Zusammenhang sei, daß die Zeitspanne zwischen dem Beginn der Zündung eines Lichtbogens und der Einschaltung des Leistungsschalters 23 mittels der elektronischen Baugruppe einstellbar ist, und zwar in einem Bereich von etwa 80 bis 150 Millisekunden. Die nun folgende - ebenfalls beeinflußbare - Einschaltdauer kann etwa 100 bis 300 Millisekungen betragen. Die einzustellenden Werte für die erwähnten Einschaltverzögerungen und auch die Einschaltdauer sowohl des Leistungsschalters 23 als auch der Magnetorgane 30 und 33 sind nicht willkürlich zu wählen, sondern sie hängen u. a. von den Zeitstaffelungen von Schutzeinrichtungen in den Unterwerken ab, d. h. von den stromversorgenden Stellen für den Fahrleitungsbetrieb.

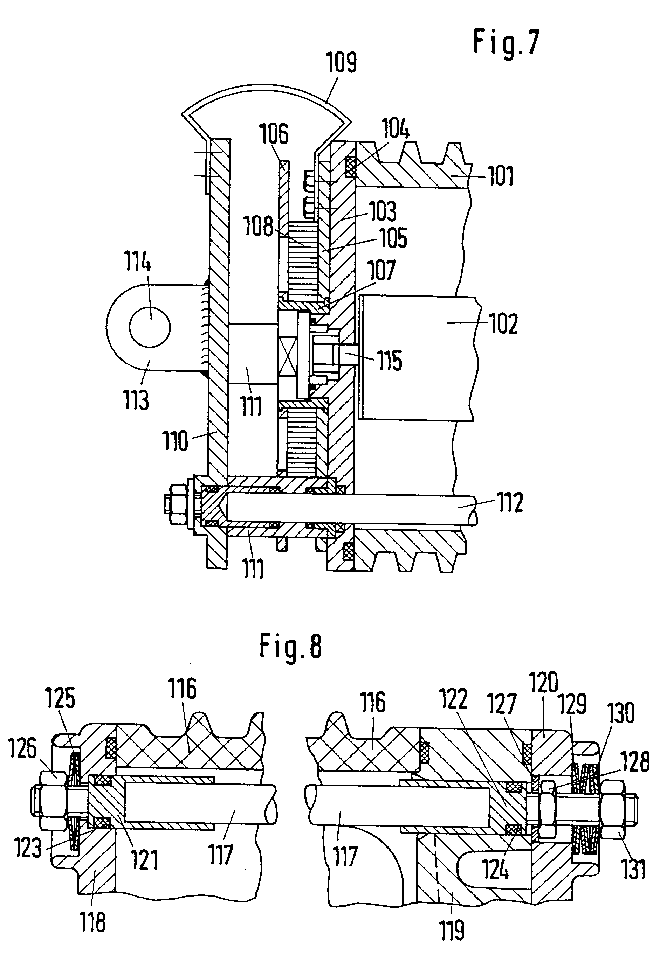

Die **Figur 7** veranschaulicht in einer zur einen Seite hin abgebrochenen Schnittdarstellung dasjenige Längsende eines Hohlisolators 101, in dem sich ein Leistungsschalter 102 befindet. Diese Darstellung zeigt eine Weiterbildungsmöglichkeit für ein Überbrückungsorgan, und zwar durch Zuordnung eines Vorwiderstandes. Hierfür ist der genannte Hohlisolator 101 zwar auch mit einem Verschlußdeckel 103 und einer darin eingelassenen Dichtung 104 druck- und auch unterdruckdicht verschlossen, dieser Verschlußdeckel 103 bildet aber nicht zugleich die Einhängestelle für ein Tragseil, vielmehr trägt sie zwei Isolierscheiben 105 und 106 sowie eine Kontaktbuchse 107. Zwischen diesen Isolierscheiben 105 und 106 befindet sich der bereits erwähnte Vorwiderstand, und zwar in Form eines gewickelten, außen isolierten Flachbandmaterials, dessen inneres Ende mit der Kontaktbuchse 107 leitend verbunden ist. Das äußere Ende des Flachbandmaterials 108 ist leitend mit einem Strombügel 109 verbunden, welcher seinerseits kontaktierend an einer Abschlußplatte 110 befestigt ist. Diese Abschlußplatte 110 verläuft parallel zum Verschlußdeckel 103 und weist, was ihre äußere Umfangskontur betrifft, praktisch eine gleiche Formgebung auf wie der Verschlußdeckel 103. Mittels isolierender Distanzhülsen 111, welche in sich jeweils eine Zugstange 112 zum Zusammenhalt des ganzen Überbrükkungsorgans aufnehmen, wird die Abschlußplatte 110 in einem deutlichen Abstand von dem Verschlußdeckel 103 und auch von der Isolierscheibe 106 gehalten. Auf ihrer vom Hohlisolator 101 abgekehrten Seite weist die Abschlußplatte 110 ein vorspringendes Ohr 113 mit einer Einhängeöffnung 114 auf. In dieser Einhängeöffnung 114 ist nun die Einhängung eines Tragseiles möglich und zugleich eine Kontaktierung mit dem zugeordneten Fahrdrahtpotential.

Der Stromverlauf geht nun vom (nicht dargestellten) Tragseil über die Abschlußplatte 110 zum Strombügel 109, von dort aus zum äußeren Wicklungsende des besagten Flachbandmaterials 108, durchläuft dieses gewickelte Flachbandmaterial und gelangt über die Kontaktbuchse 107 an den feststehenden Pol 115 des Leistungsschalters 102. Ein solcher Vorwiderstand dient dazu, den Leistungsschalter vor einer Überlastung zu schützen, und zwar durch Begrenzung des zu schaltenden Stromes. Nicht unerwähnt bleibe, daß der Strombügel 109 in seinem bogenartigen Verlauf mit einer Einschnürung versehen sein kann (was aus der Darstellung allerdings nicht zu entnehmen ist), welche die Aufgabe einer Schmelzsicherung zu erfüllen vermag. Die Wahrscheinlichkeit, daß diese Sicherungsstelle jemals ansprechen muß, ist zwar sehr gering, ganz auszuschließen sind derartige Situationen allerdings nicht, beispielsweise bei Blitzeinschlägen in das elektrische Leitungssystem.

Die Befestigung der Zugstangen 112 erfolgt in gleicher oder ähnlicher Weise, wie es bei den zuvor erläuterten Konstruktionen der Fall ist und wie dieses gleich nachfolgend mit Blick auf die Figur 8 detailliert erklärt werden soll.

Die **Figur 8** zeigt in einer gegenüber den zuvor erläuterten Darstellungen im Maßstab noch weiter vergrößerten Schnittansicht zwei Längsenden eines Hohlisolators 116 mit den zugeordneten Längsenden einer Zugstange 117. Das in der Darstellung links gelegene Ende des Hohlisolators 116 ist mit einem Verschlußdeckel 118 abgeschlossen, das entgegengesetzte Ende ist mit einem Zwischenstück 119 und sodann auch mit einem Verschlußdeckel 120 ausgestattet und verschlossen.

An den Längsenden der Zugstange 117 befinden sich daran befestigte Schraubarmaturen 121 und 122, die jeweils mit einem Dichtelement 123 bzw. 124 ausgestattet sind. An ihren voneinander gerichteten Längsbereichen sind die Schraubarmaturen 121 und 122 mit sprunghaften Durchmesserverringerungen versehen, die ein Gewinde aufweisen. Die in der Darstellung links gelegene Schraubarmatur 121 durchragt eine Öffnung im Verschlußdeckel 118, welche sich nach außen hin stufenartig verringert, wobei die lichten Durchmesser denen der Schraubarmatur 121 angepaßt sind. Der Absatz an der Schraubarmatur 121 liegt fest an dem korrespondierenden Absatz in der Öffnung im Verschlußdeckel 118, und die Halterung der Schraubarmatur 121 in der dargestellten Lage erfolgt mittels gegeneinandergestellter Tellerfedern 125 und einer Sechskantmutter 126. Diese Sechskantmutter 126 kann so fest angezogen sein, daß die gegeneinandergestellten Tellerfedern 125 etwa gleichebenig aneinanderliegen, man kann allerdings auch vorsehen, die Mutter 126 etwas weniger fest anzuziehen, derart, daß die gegeneinandergestellten Tellerfedern noch um einen geringen Betrag von einigen Zentelmillimetern bis hin zu maximal einem Millimeter auseinanderklaffen.

Bei der zweiten Schraubarmatur 122 am entgegengesetzten Längsende der Zugstange 117 sind die Montageverhältnisse etwas anders gestaltet als eben geschildert. Hier durchragt die Schraubarmatur 122 eine (abgesehen von einer Anfasung) durchgehend zylindrische Öffnung im Zwischenstück 119 und sodann eine zylindrische Öffnung im Verschlußdeckel 120, wobei die letztgenannte Öffnung im Durchmesser größer ist als diejenige im Zwischenstück 119. In einem ersten Montageschritt werden eine Unterlegscheibe 127 und eine (schmale) Sechskantmutter 128 wie dargestellt montiert, so daß das Zwischenstück 119 am Hohlisolator 116 festgehalten ist. Hierzu ist anzumerken, daß der Außendurchmesser der Unterlegscheibe 127 größer ist als die Durchtrittsöffnung im Zwischenstück 119, so daß die genannte Verspannung der Teile miteinander möglich ist. Sodann kann der Verschlußdeckel 120 montiert und auch verschraubt werden, wozu eine größere Unterlegscheibe 129, ein Satz Tellerfedern 130 und eine weitere Sechskantmutter 131 benötigt werden. Aus wievielen einzelnen Tellerfedern der Tellerfeder-Satz 130 bestehen muß, ist je nach den auftretenden bzw. erwünschten Kräfteverhältnissen festzulegen und also berechenbar. Wesentlich ist es hierbei, daß die Zugkraft, der jede einzelne Zugstange 117 auszusetzen ist, größer sein soll als die Zugkraft zwischen den Tragseilabschnitten 13 und 14, siehe hierzu die Figur 1. Die Tellerfedern 130 gestatten es, das Erreichen der gewünschten Zugkraft auch optisch in etwa erkennbar zu machen, außerdem aber sorgen die Tellerfedern 130 dafür, daß diese Zugkraft über einen weiten Außentemperaturbereich stets annähernd gleich erhalten bleibt. Eine gewisse Problematik hierbei besteht nämlich darin, daß das Material der Zugstangen 117 (wovon also bei einem Überbrückungsorgan zwei oder mehrere, beispielsweise drei Stück Verwendung finden) einen durchaus anderen Ausdehnungskoeffizienten haben kann, als dieses beim Körper des Hohlisolators 116 der Fall ist. Bei sehr niedrigen Temperaturen kann sich also die Zugstange 117 etwas mehr verkürzen als der Hohlisolator 116, und auch umgekehrt, bei starker Erwärmung ist die Ausdehnung bei der Zugstange 117 größer als beim Hohlisolator 116. Diese Längenschwankungen sind durch einen entsprechend gewählten Satz von Tellerfedern sehr wohl auszugleichen, ohne die an der Zugstange 117 angreifenden Zugkräfte nennenswert zu verändern. Dieser Effekt liegt in der besonderen Federcharakteristik der Tellerfedern begründet. Bei Temperaturschwankungen wird sich demzufolge die Lage der Schraubarmatur 122 innerhalb des Zwischenstückes 119 entsprechend verändern, was aber keinen Einfluß auf die Abdichtung hat, da das Dichtelement 124 seine Funktion auch bei einer axialen Verschiebung voll erfüllt. Nicht unerwähnt bleibe, daß der schmalen Sechskantmutter 118 praktisch keine Funktion mehr zukommt, sobald die Tellerfedern 130 und die Sechskantmutter 131 ordnungsgemäß montiert sind. Vielmehr spielt sich der Dehnungsausgleich im Bereich der eben genannten Tellerfedern 130 ab, unter vorhin erwähnten Umständen geringfügig auch bei den gegenüberliegenden Tellerfedern 125, und eine Axialverschiebung unter Beibehaltung der Abdichtungsfunktion erfolgt in erster Linie zwischen der Schraubarmatur 122 und dem Zwischenstück 119.

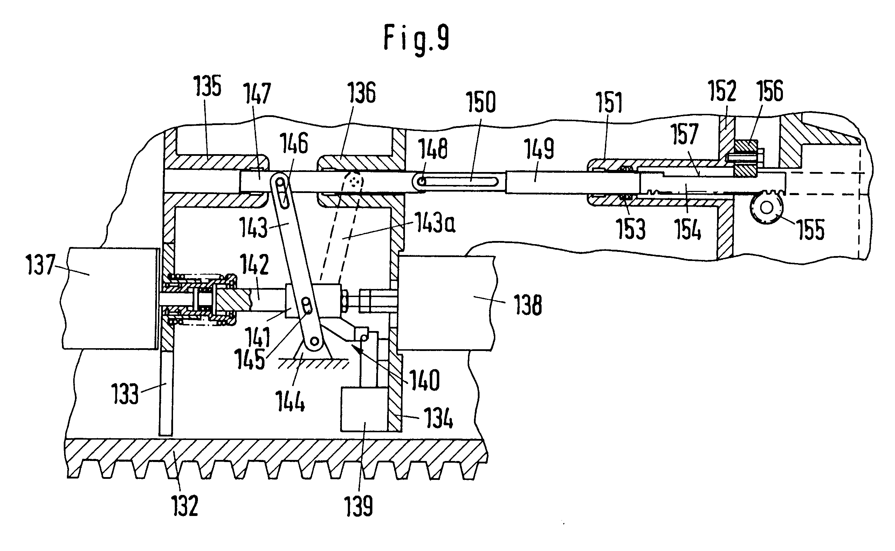

Schließlich zur **Figur 9** in welcher eine Alternative für die Gestaltung einer Trennstrecke bzw. eines Trennschalters dargestellt ist. Gezeigt in dieser Schnittdarstellung sind nur diejenigen Bereiche, die für diesen Trennschalter von Bedeutung sind. Innerhalb eines Hohlisolators 132 befinden sich, ähnlich wie bei der zuvor erläuterten Konstruktion, eine erste Tragscheibe 133 und - in einem Abstand dazu - eine zweite Tragscheibe 134. Auch diese Tragscheiben sind mit Kontaktbuchsen 135 und 136 ausgestattet und bilden mit diesen, potentialmäßig gesehen, eine Einheit. An der ersten Tragscheibe ist auch hier ein Leistungsschalter 137 befestigt, an der zweiten Tragscheibe 134 finden ein Hubmagnet 138 sowie ein Haltemagnet 139 ihre Befestigung. Dieser Haltemagnet 139 und eine mit diesem zusammenwirkende Sperrvorrichtung 140 sind zwar konstruktiv etwas anders ausgebildet als dieses bei der Konstruktion gemäß den Figuren 5 und 6 der Fall ist, das Funktionsprinzip gleicht jedoch dieser zuvor erläuterten Konstruktion und soll hier nicht näher erläutert werden. Auch hier findet ein Schwunggewicht 141 Verwendung, welches aber hier außer einer Verbindung mit einem Verbindungsgestänge 142 zum Leistungsschalter 137 auch noch eine gelenkige Verbindung mit einem Übertragungshebel 143 aufweist. Dieser Übertragungshebel 143 ist an seinem in der Darstellung nach unten gerichteten Längsende an einer ortsfesten Lagerstelle 144 schwenkbar gelagert, im Bereich seiner gelenkigen Verbindung mit dem Schwunggewicht 141 weist er ein kürzeres Langloch 145 und an seinem in der Darstellung nach oben gerichteten Längsende weist er schließlich ein im Ausmaß längeres Langloch 146 auf. Im Bereich dieses Langloches 146 ist der Übertragungshebel 143 mit einem Schubkontakt 147 gelenkig und - im Bereich des Langloches 146 - verschieblich verbunden. Dieser Schubkontakt 147 ist seinerseits über ein Mitnehmerorgan 148 mit einer Betätigungsstange 149 "funktionell" verbunden, wozu ein Langloch 150 in der Betätigungsstange 149 dient. Diese Betätigungsstange 149 ist - längsverschieblich - in einer buchsenartigen Anformung 151 eines Zwischenstückes 152 geführt und mittels einer Dichtung 153 auch ringsum abgedichtet. An ihrem in der Darstellung nach rechts weisen Ende ist die Betätigungsstange 149 mit einer Zahnstange 154 gekoppelt, die ihrerseits mittels eines Zahnritzels 155 in ihrer Längsstellung veränderbar ist. Ein Anschlag 156, welcher in eine Ausnehmung 157 in der Zahnstange 154 eingreift, begrenzt hierbei die Verschieblichkeit der Zahnstange 154 nach beiden Richtungen hin. Eine nahezu gleiche Begrenzung der Längsverschieblichkeit ist übrigens auch beim Trennschalter gemäß der oben bereits erläuterten Figur 3 verwirklicht, aber nicht näher erläutert worden.

Die Funktion des in der Figur 9 gezeigten Trennschalters ist folgende:
Voll ausgezeichnet ist die Einschaltstellung des Leistungsschalters 137, in welcher sich auch der Trennschalter in seiner geschlossenen, d. h. die Kontaktbuchsen 135 und 136 überbrückenden Lage befindet. In dieser Einschaltstellung ist der Hubmagnet 138 erregt und hat das Verbindungsgestänge 142 zum Leistungsschalter 137 hin bewegt...und diese Einschaltstellung ist auch mittels der Sperrvorrichtung 140 solange verriegelt, wie der Haltemagnet 139 mit Spannung versorgt ist. Beim Ausschaltvorgang werden das Schwunggewicht 141 und mit diesem auch der Übertragungshebel 143 zum Hubmagneten 138 hin bewegt, wodurch der Übertragungshebel 143 in die gestrichelt angedeutete Stellung 143a gelangt. Hierbei nimmt der Übertragungshebel 143 den Schubkontakt 147 mit, so daß die elektrische Verbindung zwischen den Kontaktbuchsen 135 und 136 unterbrochen und darüber hinaus die gewünschte Trennstrecke zwischen diesen Kontaktbuchsen hergestellt wird. Das Mitnehmerorgan 148 am Schubkontakt 147 gleitet entlang des Langloches 150 in Richtung der buchsenartigen Anformung 151 bzw. des Zwischenstückes 152. Beim Einschaltvorgang wird - über den Übertragungshebel 143 - der Schubkontakt 147 wieder zurück in seine gezeigte Lage geführt. Wesentlich hierbei ist, daß der Schubkontakt 147 nach **jeder** Ausschaltung des Leistungsschalters 137 in seine Trennstellung geführt und beim Einschaltvorgang wieder in seine Schließstellung gebracht wird. Zu bemerken hierzu ist, daß die Herstellung der Schließstellung des Trennschalters unbedingt vor dem Einschaltvorgang des Leistungsschalters 137 erfolgen muß und beim Ausschaltvorgang zunächst der Leistungsschalter 137 seine Aufgabe erfüllt haben muß und sodann erst die Trennstrecke hergestellt wird. Bei diesen geschilderten Schalt- und Bewegungsvorgängen bleibt die Betätigungsstange 149 in ihrer dargestellten Lage.

Wenn, beispielsweise infolge des Defektes eines der Steuer- oder Schaltorgane, der Leistungsschalter 137 nicht ausschaltet, oder wenn zwischen dem Schubkontakt 147 und einer der Kontaktbuchsen 135 oder 136 eine Verschweißung stattgefunden hat, oder auch bei anderen Defekten mit der Wirkung, daß der Schubkontakt 147 nicht automatisch in seine Trennstellung zurückfährt, kann diese durch eine Betätigung einer entsprechenden Handhabe außerhalb des Überbrückungsorgans hergestellt werden. Diese Betätigung (siehe die Antriebswelle 69 in der Figur 4) hat zur Folge, daß das Zahnritzel 155 verdreht wird, somit die Zahnstange 154 aus der gezeigten Lage nach rechts bewegt wird und hierbei die Betätigungsstange 149 mitnimmt. Diese Betätigungsstange 149 wiederum reißt, über das Mitnehmerorgan 148, den Schubkontakt 147 aus der dargestellten Schließlage in die oben erläuterte Trennstellung. Hierbei wird auch der Übertragungshebel 143 in seine gestrichelt gezeigte Lage 143a geführt und somit auch die Ausschaltstellung beim Leistungsschalter 137 erzielt. Befindet sich die Betätigungsstange 149 dann in ihrer eben erläuterten Ausschaltlage, so ist eine Einschaltung des Leistungsschalters 137 nicht möglich, und zwar so lange nicht, bis die Betätigungsstange 149 wieder in ihre gezeigte Lage zurückgeführt wird.

Wie eingangs der Beispielsbeschreibung bereits zum Ausdruck gebracht, veranschaulichen die Figuren lediglich Ausführungsbeispiele des Erfindungsgedankens. Mannigfache Abwandlungen der konstruktiven Ausgestaltung oder von konstruktiven Einzelheiten sind im Rahmen der Ansprüche denkbar und realisierbar.

## Patentansprüche

1. Der elektrischen Trennung einander benachbarter Abschnitte (11, 12) einer elektrischen Fahrleitung für Triebfahrzeuge dienender **Streckentrenner** (10) mit einem Trennisolator (18) und mit einem als Hohlisolator ausgebildeten Überbrückungsorgan (20), wobei der Trennisolator 18 zum Überfahren durch einen Stromabnehmer des Triebfahrzeuges mit einem Schleifkufenpaar (17) kombiniert und außerdem mit einer parallel zur Fahrleitung verlaufenden Hilfselektrode (19) ausgestattet ist, und wobei der Hohlisolator des Überbrückungsorgans (20) in seinem Inneren einen dem kurzzeitigen Kurzschließen der benachbarten Abschnitte (11, 12) der Fahrleitung dienenden Leistungsschalter (23) mit einem elektromagnetischen Antrieb (30) enthält, welch letzterer direkt oder indirekt von der Spannungsdifferenz gespeist wird, die zwischen dem Potential eines Fahrdrahtabschnittes (11, 12) und dem Potential der Hilfselektrode (19) auftritt, wenn und solange zwischen dem mit dem einen Fahrleitungsabschnitt (11, 12) verbundenen Schleifkufenpaar (17) und dem benachbaren Fahrleitungsabschnitt (11, 12) beim Überfahren des Stromabnehmers ein Lichtbogen gezogen wird, der zur Hilfselektrode (19) kommutiert,
dadurch gekennzeichnet, daß der Hohlisolator des Überbrückungsorgans (20) im wesentlichen aus einem hohlzylindrischen Isolierrohr (26; 101; 116; 132) mit beidendig des Isolierrohres dichtend anliegenden Verschlußdeckeln (27, 28; 118, 120) und aus wenigstens zwei mit entsprechenden Schraubelementen ausgestatteten Zugstangen (29; 112; 117)) besteht, welche die Verschlußdeckel - radial abgedichtet - durchdringen und mittels welcher die zuvor genannten Teile des Hohlisolators gegeneinander verspannt sind, wobei die Zugspannung jeder einzelnen Zugstange größer ist als die zu erwartende Zugspannung am zwischen Tragseilen (13, 14) eingespannten Überbrückungsorgan (20)
und daß im Inneren des Hohlisolators außer dem Leistungsschalter (23) und dessen elektromagnetischem Antrieb in Gestalt eines Hubmagneten (30) auch noch ein Sättigungsstromwandler (31) mit - schaltungsmäßig gesehen - nachgeordneten elektronischen Kondensatorschaltungen (32) enthalten sind, weiterhin eine von einem Haltemagneten (33; 139) betätigbare Sperrvorrichtung (34; 140) zur Arretierung des Leistungsschalters (23; 102; 137) in seiner Einschaltstellung wenigstens so lange, wie der Hubmagnet mit Spannung versorgt ist, und schließlich ein Trennschalter (44 + 45 + 63 + 135 + 136 + 147), dessen Schaltstellung mittels einer aus dem Überbrückungsorgan bzw. aus einem Verschlußdeckel (Zwischenstück 38) seines Hohlisolators herausgeführten, manuell oder motorisch oder elektromagnetisch betätigbaren Antriebswelle (69) veränderbar sein kann.

2. Streckentrenner nach Anspruch 1, dadurch gekennzeichnet, daß das hohlzylindrische Isolierrohr (26; 101; 116; 132) aus einem witterungsbeständigen Gießharz bzw. aus einem Duroplast besteht, oder stattdessen aus einem keramischen Material, insbesondere aus Porzellan, oder schließlich aus Glas.

3. Streckentrenner nach Anspruch 1 oder 2, dadurch gekennzeichnet, daß das hohlzylindrische Isolierrohr (26; 101; 116; 132) auf seiner äußeren Mantelfläche zur Kriechstreckenverlängerung mit einer großen Anzahl umlaufender Nuten (35) vergleichsweise geringer Tiefe (verglichen nämlich mit der Formgebung bekannter Isolatoren) versehen ist, zwischen denen somit umlaufende Kragen oder Rippen (36) gebildet sind.

4. Streckentrenner nach einem der Ansprüche 1 bis 3, dadurch gekennzeichnet, daß die Zugstangen (29; 112; 117) zum Zusammenhalt der Teile des Hohlisolators (26; 101; 116; 132) aus einem Isolierstoff bestehen, insbesondere aus einem glasfaserverstärkten Kunststoff.

5. Streckentrenner nach einem der Ansprüche 1 bis 4, dadurch gekennzeichnet, daß das Innere seines Überbrückungsorgans (20) bzw. seines Hohlisolators (26; 101; 116; 132) druckdicht und unterdruckdicht gekapselt ist und mit einem vorzugsweise gasförmigen Isoliermedium angefüllt ist, welches günstigere Isolationseigenschaften aufweist als das Medium "Luft", nämlich insbesondere Schwefelhexafluorid (SF₆).

6. Streckentrenner nach einem der Ansprüche 1 bis 5, dadurch gekennzeichnet, daß als Leistungsschalter (23) eine Vakuumschaltröhre Verwendung findet, deren Kontaktstößel (94) direkt oder indirekt sowohl mit einer Rückstellfeder (97), als auch mit einer Kontaktdruckfeder (98) in Verbindung steht und bei den Schaltvorgängen mit diesen Federn zusammenwirkt.

7. Streckentrenner nach einem der Ansprüche 1 bis 6, dadurch gekennzeichnet, daß der Kontaktstößel (94) des Leistungsschalters (23) oder ein damit in Verbindung stehendes Element in Form beispielsweise eines Federtellers (Buchsenorgan 93) oder eines vorstehenden Stiftes beim Ausschaltvorgang an einen wenigstens geringfügig ausfedernden oder elastisch verformbaren Begrenzungsanschlag (100) auftrifft, welch letzterer den Ausschalthub begrenzt und zugleich den Aufschlag dämpft.

8. Streckentrenner nach Anspruch 6 oder 7, dadurch gekennzeichnet, daß der Anker (46) des Hubmagneten (30) beim Ausschaltvorgang, d. h. bei Eintreten der Spannungslosigkeit, infolge der Wirkung eines Rückführorgans (Druckfeder 53) in seine Ausgangslage zurückgeführt wird, wobei die hierbei zurückgelegte Wegstrecke größer ist als diejenige des Kontaktstößels (94) des Leistungsschalters (23), und daß hierfür in einem zwischen dem Anker und dem Kontaktstößel gelegenen Verbindungsgestänge (Stößel 90), welches mit der Rückstellfeder (97) und der Kontaktdruckfeder (98) des Leistungsschalters (23) in Verbindung steht, eine entsprechende Freilaufstrecke vorgesehen ist.

9. Streckentrenner nach einem der Ansprüche 1 bis 8, dadurch gekennzeichnet, daß der bewegliche Teil des elektromagnetischen Antriebes bzw. der Anker (46) des Hubmagneten (30) für den Leistungsschalter (23) oder das zwischen Anker und dem Betätigungsstößel des Leistungsschalters gelegene Verbindungsgestänge (Stößel 90) mit einem Schwunggewicht (74) ausgestattet ist, dessen Hammerwirkung im Zusammenspiel mit der Freilaufstrecke gemäß Anspruch 8 eine sichere Arretierung des Leistungsschalters in seiner Einschaltstellung und - in umgekehrter Richtung - eine sichere Kontakttrennung beim Leistungsschalter im Ausschaltfalle gewärleistet.

10. Streckentrenner nach den Ansprüchen 8 und 9, dadurch gekennzeichnet, daß das Schwunggewicht (74) an dem dem Anker (46) des Hubmagneten (30) zugekehrten Ende des Verbindungsgestänges (Stößel 90) gelegen ist, und daß zwischen diesem Verbindungsgestänge und dem Schwunggewicht (74) und somit dem Anker (46) bzw. einer vom Anker ausgehenden Justierstange (Gewindestück 73) ein Bewegungsspielraum in längsaxialer Richtung besteht, welcher einen Teil der Freilaufstrecke (gemäß Anspruch 8) bildet.

11. Streckentrenner nach einem der Ansprüche 8 bis 10, dadurch gekennzeichnet, daß das Verbindungsgestänge bzw. dessen Stößel (90) aus einem elektrisch isolierenden Material besteht und eine Potentialtrennungsfunktion erfüllt.

12. Streckentrenner nach einem der Ansprüche 1 bis 11, dadurch gekennzeichnet, daß der bewegliche Teil des magnetischen Antriebes bzw. eine Verlängerung (Zugstange 47) des Ankers (46) des Hubmagneten (30), hier insbesondere eine Verlängerung des Ankers in vom Leistungsschalter (23) abgekehrter Richtung, mit einer Vorrichtung zur Schaltstellungsanzeige gekoppelt ist, welch letztere eine Dreh- oder Schubwelle (Schaltwelle 49) enthält, die aus dem Inneren des Überbrückungsorgans (20) bzw. aus dessen Hohlisolator (26) herausgeführt und im herausgeführten Bereich mit einem Zeiger oder einer Anzeigescheibe (50) ausgestattet ist.

13. Streckentrenner nach einem der Ansprüche 1 bis 12, dadurch gekennzeichnet, daß der Trennschalter von zwei in einem Abstand voneinander gelegenen Kontaktbuchsen (44, 45) und einem Schubkontaktstift (63) gebildet ist, welch letzterer in der Einschaltstellung des Trennschalters beide Kontaktbuchsen elektrisch kontaktierend miteinander verbindet und welcher in der Trennstellung aus der einen Kontaktbuchse (44) vollständig herausgezogen und soweit von ihr entfernt ist, daß zwischen dieser letztgenannten Kontaktbuchse und dem zugekehrten Ende des Schubkontaktes sowie auch der anderen Kontaktbuchse (45) eine hinreichende bzw. mindestens eine in Vorschriften vorgesehene Trennstrecke gebildet ist.

14. Streckentrenner nach Anspruch 13, dadurch gekennzeichnet, daß der Schubkontaktstift (63) des Trennschalters an seinem von den Kontaktbuchsen (44, 45) abgekehrten Längsbereich mit einer Zahnung (64) versehen oder an diesem Längsende mit einer Zahnstange verbunden ist, und daß der verzahnte Längsbereich des Schubkontaktstiftes bzw. die mit diesem verbundene Zahnstange mit einem Zahnritzel (65) zusammenwirkt, mittels welchem der Schubkontaktstift in die jeweils erwünschte Schaltstellung axial verschiebbar ist.

15. Streckentrenner nach Anspruch 14, dadurch gekennzeichnet, daß die Betätigung des Trennschalters (44 + 45 + 63) durch Verdrehen einer aus dem Hohlisolator (26) bzw. aus dessen einem Verschlußdeckel oder einem Zwischenstück (38) herausgeführten, vorzugsweise am herausgeführten freien Ende mit einem radial verlaufenden Querbolzen (70) versehenen Antriebswelle (69) erfolgt, welche an ihrem in das Innere des Überbrückungsorgans (20) gerichteten Ende das Zahnritzel (65) trägt und mit diesem fest verbunden ist.

16. Streckentrenner nach einem der Ansprüche 1 bis 15, dadurch gekennzeichnet, daß im Inneren des Hohlisolators (26) wenigstens zwei in einem Abstand voneinander gelegene Tragscheiben (42, 43) angeordnet und unverschieblich befestigt sind, die der Abstützung und Halterung der im Hohlisolator aufgenommenen Funktionsorgane dienen.

17. Streckentrenner nach Anspruch 16, dadurch gekennzeichnet, daß wenigstens eine der im Inneren des Hohlisolators gelegenen Tragscheiben (42, 43) außer ihrer Tragfunktion auch noch der Stromleitung dient.

18. Streckentrenner nach einem der Ansprüche 16 oder 17, dadurch gekennzeichnet, daß im Inneren des Hohlisolators (26) zwischen einem Verschlußdeckel (27) und einer ersten Tragscheibe (42) der Leistungsschalter (23) angeordnet ist, daß zwischen der ersten (42) und einer zweiten Tragscheibe (43) das Verbindungsgestänge (Stößel 90 usw.), welches den Leistungsschalter (23) mit seinem elektromagnetischen Antrieb (Hubmagnet 30) koppelt, weiterhin der Haltemagnet (33) mit der von diesem betätigbaren Sperrvorrichtung (34) zur Arretierung des Leistungsschalters, und schließlich die beiden vom Schubkontaktstift (63) des Trennschalters elektrisch verbindbaren Kontaktbuchsen (44, 45) gelegen sind, zwischen denen die Trennstrecke herstellbar ist, und daß zwischen der zweiten Tragscheibe (43) und dem anderen, zweiten Verschlußdeckel (28) der elektromagnetische Antrieb in Gestalt des Hubmagneten (30), der Sättigungsstromwandler (31) einschließlich seiner Kondensatorschaltungen (d. h. einschließlich einer in einer Kapselung (32) angeordneten elektronischen Baugruppe) und Gestängeteile sowohl des Trennschalterantriebes als auch der mit dem Hubmagneten verbundenen Vorrichtung (47...50) zur Schaltstellungsanzeige (falls eine solche vorhanden ist) untergebracht und befestigt sind.

19. Streckentrenner nach einem der Ansprüche 1 bis 18, dadurch gekennzeichnet, daß an demjenigen Längsende des Hohlisolators (26), in welchem der elektromagnetische Antrieb (Hubmagnet 30) und der Sättigungsstromwandler (31) angeordnet sind, zwischen dem Verschlußdeckel (28) und einem Zwischenstück (38), ein gegen die Außenatmosphäre gar nicht oder nicht druckfest abgedichteter, jedoch gegen Witterungseinflüsse weitgehend geschützter Außenraum (55) gebildet ist, welcher von der Dreh- bzw. Schubwelle (Schaltwelle 49) der Vorrichtung (47...50) zur Schaltstellungsanzeige sowie/oder der Antriebswelle (69) zur Betätigung des Trennschalters (44 + 45 + 63) durchsetzt wird und aus dem die genannten Wellen dann aus dem Überbrückungsorgan (20) nach unten hin herausgeführt sind.

20. Streckentrenner nach einem der Ansprüche 1 bis 19, dadurch gekennzeichnet, daß an demjenigen Längsende des Hohlisolators (101), in welchem der Leistungsschalter (102) angeordnet ist, nach außen hin in einem Abstand vom Verschlußdeckel (103) entfernt, eine metallische Abschlußplatte (110) angeordnet ist, die mit dem Verschlußdeckel über Isolierdistanzhülsen (111) und die vom Hohlisolator austretenden Zugstangen (112) fest verbunden, gegen den Verschlußdeckel jedoch elektrisch isoliert ist, und daß zwischen dem genannten Verschlußdeckel und der Abschlußplatte ein Vorwiderstand angeordnet ist, insbesondere ein solcher in Form eines gewickelten Flachbandmaterials (108) und seitlichen Isolierscheiben (105, 106). (Figur 7)

21. Strecktrenner nach Anspruch 20, dadurch gekennzeichnet, daß von der metallischen Abschlußplatte (110) ein an einem Ende mit dieser kontaktierend verbundener und streckenweise mit einer Querschnittsverringerung versehener Strombügel (109) ausgeht, dessen anderes Ende an dem einen bzw. am freien Ende des Vorwiderstandes (108) kontaktierend befestigt ist.

22. Streckentrenner nach einem der Ansprüche 1 bis 21, dadurch gekennzeichnet, daß der Anker des elektromagnetischen Antriebes (Hubmagnet 138) für den Leistungsschalter (137) oder ein mit dem Anker verbundenes Gestängeteil (Schwunggewicht 141) mit einem Übertragungshebel (143) gelenkig verbunden ist, welch letzterer mit seinem einen Ende an einem ortsfesten Drehlager (144) angelenkt und an seinem entgegengesetzten Ende gelenkig mit dem Schubkontakt (147) eines Trennschalters verbunden ist, derart, daß die Trennstrecke des Trennschalters noch vor dem Einschalten des Leistungsschalters hinreichend kontaktierend überbrückt ist und erst nach beendetem Ausschaltvorgang des Leistungsschalters aufgetrennt wird. (Figur 9)

23. Streckentrenner nach Anspruch 22, dadurch gekennzeichnet, daß der Schubkontakt (147) des Trennschalters an seinem dem kontaktierenden Ende entgegengesetzten Längsende über ein Mitnehmerorgan (148) mit einer manuell oder motorisch in längsaxialer Richtung aus einer Arbeitsstellung in eine Trennstellung und umgekehrt verschiebbaren Betätigungsstange (149) gekoppelt ist, und zwar derart, daß in der Arbeitsstellung der Betätigungsstange der Schubkontakt vom Übertragungshebel ungehindert in seine überbrückende und zurück in seine trennende Stellung führbar ist, daß in der Trennstellung der Betätigungsstange hingegen auch der Schubkontakt vom Mitnehmerorgan in seiner trennenden Stellung gefesselt und gegebenenfalls vorher über das Mitnehmerorgan von seiner überbrückenden in seine trennende Stellung überführt worden ist. (Figur 9)

24. Streckentrenner nach Anspruch 23, dadurch gekennzeichnet, daß der dem Schubkontakt (147) zugekehrte Längsbereich der Betätigungsstange (149) aufgegabelt ist, daß ein je nach dessen Schaltstellung veränderbarer Längsbereich des Schubkontaktes zwischen den Aufgabelungen aufgenommen ist, und daß das der Koppelung zwischen der Betätigungsstange und dem Schubkontakt dienende Mitnehmerorgan (148) von einem den Schubkontakt quer durchdringenden Stift gebildet ist, dessen beiderseits des Schubkontaktes vorstehende Enden in Langlöcher (150) eingreifen, welche in den Aufgabelungen der Betätigungsstange in Längsrichtung angeordnet sind. (Figur 9)

25. Streckentrenner nach Anspruch 23 oder 24, dadurch gekennzeichnet, daß der Antrieb der Betätigungsstange (149) manuell und in gleicher Weise erfolgt, wie dieses in den Ansprüchen 14 und 15 für einen Trennschalter bzw. dessen Schubkontaktstift vorgesehen ist.

26. Streckentrenner nach einem der Ansprüche 1 bis 25, dadurch gekennzeichnet, daß ein aus dem Inneren des Überbrückungsorgangs (20) herausgeführtes Organ (Schubkontaktstift 63; Zahnstange 154) eines Trennschalters oder einer den Trennschalter beeinflussenden Vorrichtung mit einer Signalscheibe (66) gekoppelt ist, die in einer der beiden möglichen Schaltstellungen in einer Nische (67) des Verschlußdeckels (28) verborgen ist und in der zweiten Schaltstellung aus der Nische austritt bzw. bis zur Nischenrandung herausgeschoben und somit von außen her optisch erkennbar ist. (Figur 3)

27. Streckentrenner nach einem der Ansprüche 1 bis 26, dadurch gekennzeichnet, daß die Austrittsstelle aus dem gegen Witterungseinflüsse geschützten Außenraum (55) gemäß Anspruch 19 für die Dreh- bzw. Schubwelle (Schaltwelle 49) einer Vorrichtung zur Schaltstellungsanzeige und/oder einer Antriebswelle (69) für eine manuelle Trennschalterbetätigung, insbesondere, wenn diese Austrittsstelle senkrecht oder schräg nach unten gerichtet ist, von einem Tropfteller (57) mit einer äußeren, umlaufenden Abtropfkante umgeben ist.

28. Streckentrenner nach einem der Ansprüche 1 bis 27, dadurch gekennzeichnet, daß die (gemäß Anspruch 18) zwischen der ersten (42) und der zweiten Tragscheibe (43) gelegene und hier zwischen den beiden Kontaktbuchsen (44,45) herstellbare Trennstrecke eines Trennschalters seitlich des zwischenisolierten Verbindungsgestänge angeordnet ist, welches den Anker (46) des Hubmagneten (30) mit dem Kontaktstößel (94) des Leistungsschalters (23) verbindet, und im übrigen parallel zu diesem Verbindungsgestänge verläuft.

29. Streckentrenner nach einem der Ansprüche 1 bis 28, dadurch gekennzeichnet, daß an den beiden Längsenden des Überbrückungsorgans (20), ausgehend von dessen äußeren Verschlußdeckeln (27, 28) bzw. von dessen Abschlußplatte (110) (gemäß Anspruch 20), Einhängeösen oder vorspringende Ohren (58, 59; 113) mit jeweils einer Einhängeöffnung (60, 61; 114) ausgebildet sind, wobei die Einhängeösen bzw. Einhängeöffnungen deutlich oberhalb der in Längsrichtung verlaufenden Schwerachse des Überbrückungsorgans gelegen sind.

30. Streckentrenner nach einem der Ansprüche 1 bis 29, dadurch gekennzeichnet, daß die Zugstangen (29; 112; 117) zum Zusammenhalt des Hohlisolators (26; 101; 116; 132) mit den an diesen angrenzenden Teilen (27, 28, 28; 103 110 usw.) an wenigstens einem ihrer Längsenden mit Mitteln (u. a. 125, 130) zum Dehnungsausgleich ausgestattet sind. (Figur 8)

31. Streckentrenner nach Anspruch 30, dadurch gekennzeichnet, daß als Mittel zum Dehnungsausgleich für die Zugstangen (29; 112; 117) in geeigneter Weise zueinander angeordnete Tellerfedern (125, 130) Verwendung finden. (Figur 8)

32. Streckentrenner nach einem der Ansprüche 1 bis 31, dadurch gekennzeichnet, daß das Innere des Überbrückungsorgans (20) bzw. seines Hohlisolators mittels eines Überdrucksicherheitsventils druckentlastbar ist, wobei die Ausblasöffnung dieses Ventils nach oben hin ausgerichtet ist.

33. Streckentrenner nach einem der Ansprüche 1 bis 32, dadurch gekennzeichnet, daß im Inneren des Überbrükungsorgans (20) ein Trocknungsmittel zur Verringerung des Feuchtegehalts des das Innere ausfüllenden Mediums angeordnet ist, vorzugsweise Aktivtonerde.

34. Streckentrenner nach einem der Ansprüche 1 bis 33, dadurch gekennzeichnet, daß die innerhalb des Überbrückungsorgans (20) angeordneten Kondensatorschaltungen bzw. die gesamte elektronische Baugruppe zur Gewährleistung einer "Elektro-Magnetischen Verträglichkeit" (auch als "EMV" bezeichnet) hermetisch gekapselt (Kapselung 32) ist.

## Claims

1. Section isolator (10) which serves to electrically isolate adjacent sections (11, 12) of an electric contact line for tractive units, the said section isolator (10) having a disconnecting isolator (18) and having a shorting element (20) which is constructed as a hollow insulator, the disconnecting isolator 18 [sic] being combined with a pair of collector slipper runners (17) for a current collector of the tractive unit to pass over and, in addition, being equipped with an auxiliary electrode (19) which extends parallel to the contact line, and the hollow insulator of the shorting element (20) containing in its interior a circuit breaker (23) which serves to briefly short-circuit the adjacent sections (11, 12) of the contact line and has an electromagnetic drive (30) which is fed directly or indirectly from the voltage difference which occurs between the potential of a contact wire section (11, 12) and the potential of the auxiliary electrode (19) when, and for as long as, an arc is struck between the pair of collector slipper runners (17) connected to the one contact line section (11, 12) and the adjacent contact line section (11, 12) when the current collector passes over, which arc commutates to the auxiliary electrode (19), characterized in that the hollow insulator of the shorting element (20) consists essentially of a hollow-cylindrical insulating pipe (26; 101; 116; 132) with closure covers (27, 28; 118, 120) which rest in a sealing fashion at both ends of the insulating pipe and of at least two connecting rods (29; 112; 117)) [sic] which are equipped with corresponding screw elements and which penetrate the closure covers in a radially sealed fashion and by means of which the parts of the hollow insulator referred to previously are clamped to one another, the tensile stress of each individual connecting rod being greater than the tensile stress to be expected at the shorting element (20) clamped in between supporting cables (13, 14), and in that, in addition to the circuit breaker (23) and its electromagnetic drive in the form of a lifting magnet (30), a saturation current transformer (31) with, viewed in terms of circuitry, downstream electronic capacitor circuits (32) are also contained in the interior of the hollow insulator, furthermore a blocking device (34; 140) which can be actuated by a securing magnet (33; 139) for locking the circuit breaker (23; 102; 137) in its switched-on position for at least as long as the lifting magnet is supplied with voltage, and finally an isolating switch (44 + 45 + 63 + 135 + 136 + 147) whose switch position can be varied by means of a drive shaft (69) which extends out of the shorting element or out of a closure cover (intermediate element 38) of its hollow insulator and can be actuated manually or by motor or electromagnetically.

2. Section isolator according to Claim 1, characterized in that the hollow-cylindrical insulating pipe (26; 101; 116; 132) consists of a weather-resistant casting resin or of a duroplastic, or, instead, of a ceramic material, in particular of porcelain, or finally of glass.

3. Section isolator according to Claim 1 or 2, characterized in that the hollow-cylindrical insulating pipe (26; 101; 116; 132) is provided on its outer surface, for the purpose of extending the creepage distance, with a large-number of circumferential grooves (35) which are comparatively shallow (compared namely with the shape of known insulators), between which grooves (35) circumferential collars or ribs (36) are thus formed.

4. Section isolator according to one of Claims 1 to 3, characterized in that the connecting rods (29; 112; 117) for holding together the parts of the hollow insulator (26; 101; 116; 132) consist of an insulating material, in particular of a glass fibre-reinforced plastic.

5. Section isolator according to one of Claims 1 to 4, characterized in that the interior of its shorting element (20) or of its hollow insulator (26; 101; 116; 132) is encapsulated in a pressure-tight and vacuum-tight fashion and is filled with a preferably gaseous insulating medium which has more favourable insulating properties than the medium "air", namely in particular sulphur hexafluoride (SF₆).

6. Section isolator according to one of Claims 1 to 5, characterized in that a vacuum interruptor is used as circuit breaker (23), the contact plunger (94) of which vacuum interruptor is connected directly or indirectly both to a restoring spring (97) and to a contact pressure spring (98) and during the switching processes interacts with these springs.

7. Section isolator according to one of Claims 1 to 6, characterized in that the contact plunger (94) of the circuit breaker (23) or an element which is connected thereto, in the form for example of a disc spring (bushing element 93) or a protruding pin, during the switch-off process strikes against a limiting stop (100) which experiences at least slight spring deflection or elastic deformation and which damps the switch-off travel and at the same time the impact.

8. Section isolator according to Claim 6 or 7, characterized in that the armature (46) of the lifting magnet (30) is returned during the switch-off process, i.e. when the voltage is removed, into its initial position as a result of the effect of a restoring element (pressure spring 53), the distance covered here being greater than that of the contact plunger (94) of the circuit breaker (23), and in that a corresponding freewheeling distance is provided for this in a connecting linkage (plunger 90) which is located between the armature and the contact plunger and is connected to the restoring spring (97) and to the contact pressure spring (98) of the circuit breaker (23).

9. Section isolator according to one of Claims 1 to 8, characterized in that the movable part of the electromagnetic drive or the armature (46) of the lifting magnet (30) for the circuit breaker (23) or the connecting linkage (plunger 90) located between armature and the actuation plunger of the circuit breaker is equipped with a balance weight (74) whose hammer effect ensures, in interaction with the freewheeling distance according to Claim 8, reliable locking of the circuit breaker in its switched-on position and, in the reverse direction, reliable separation of the contacts at the circuit breaker in the case of switching off.

10. Section isolator according to Claims 8 and 9, characterized in that the balance weight (74) is located at the end of the connecting linkage (plunger 90) which faces the armature (46) of the lifting magnet (30), and in that between this connecting linkage and the balance weight (74), and thus the armature (46) and an adjustment rod (threaded element 73) which starts from the armature, there is a degree of play in the longitudinal-axial direction, which play forms part of the freewheeling distance (according to Claim 8).

11. Section isolator according to one of Claims 8 to 10, characterized in that the connecting linkage or its plunger (90) consists of an electrically insulating material and fulfils a potential-isolating function.

12. Section isolator according to one of Claims 1 to 11, characterized in that the movable part of the magnetic drive or an extension (connecting rod 47) of the armature (46) of the lifting magnet (30), here in particular an extension of the armature in the direction facing away from the circuit breaker (23), is coupled to a device for indicating the switch position, which device contains a rotary shaft or push shaft (switching shaft 49) which extends out of the interior of the shorting element (20) or out of its hollow insulator (26) and is equipped in the extended area with a pointer or an indicator disc (50).

13. Section isolator according to one of Claims 1 to 12, characterized in that the isolating switch is formed by two contact bushings (44, 45) which are located at a distance from one another and one push contact pin (63) which, in the switched-on position of the isolating switch, connects the two contact bushings to one another in an electrically contact-forming fashion and which in the isolating position is completely withdrawn from the one contact bushing (44) and removed from it so far that a sufficient isolating distance, or at least an isolating distance provided for in regulations, is formed between this last-mentioned contact bushing and the facing end of the push contact and also the other contact bushing (45).

14. Section isolator according to Claim 13, characterized in that the push contact pin (63) of the isolating switch is provided at its longitudinal area, facing away from the contact bushings (44, 45), with a toothing (64), or is connected at this longitudinal end to a toothed rack, and in that the toothed longitudinal area of the push contact pin or the toothed rack which is connected thereto interacts with a toothed pinion (65) by means of which the push contact pin can be displaced axially into the respectively desired switch position.

15. Section isolator according to Claim 14, characterized in that the actuation of the isolating switch (44 + 45 + 63) takes place by rotating a drive shaft (69) which extends out of the hollow insulator (26) or its one closure cover or an intermediate element (38), is provided preferably at the extended free end with a radially extending crossbolt (70) and bears the toothed pinion (65) at its end directed into the interior of the shorting element (20) and is permanently connected to the said toothed pinion (65).

16. Section isolator according to one of Claims 1 to 15, characterized in that at least two supporting discs (42, 43) which are located at a distance from one another are arranged in the interior of the hollow insulator (26) and are non-displaceably attached, which supporting discs (42, 43) serve to support and secure the functional elements accommodated in the hollow insulator.

17. Section isolator according to Claim 16, characterized in that at least one of the supporting discs (42, 43) which are located in the interior of the hollow insulator serves, in addition to its supporting function, also to conduct current.

18. Section isolator according to one of Claims 16 or [sic] 17, characterized in that the circuit breaker (23) is arranged in the interior of the hollow insulator (26) between a closure cover (27) and a first supporting disc (42), in that the connecting linkage (plunger 90, etc.) which couples the circuit breaker (23) to its electromagnetic drive (lifting magnet 30), furthermore the securing magnet (33) with the blocking device (34), which can be actuated by the said magnet (33), for locking the circuit breaker, and finally the two contact bushings (44, 45) which can be electrically connected by the push contact pin (63) of the isolating switch, are located between the first supporting disc (42) and a second supporting disc (43), between which contact bushings (44, 45) the isolating distance can be produced, and in that the electromagnetic drive in the form of the lifting magnet (30), the saturation current transformer (31) including its capacitor circuits (i.e. including an electronic assembly arranged in an encapsulation (32)) and linkage components both of the isolating switch drive and also the device (47 ... 50), connected to the lifting magnet, for indicating the switch position (if such a device is present) are accommodated and attached between the second supporting disc (43) and the other, second closure cover (28).

19. Section isolator according to one of Claims 1 to 18, characterized in that, at that longitudinal end of the hollow insulator (26) in which the electromagnetic drive (lifting magnet 30) and the saturation current transformer (31) are arranged, between the closure cover (28) and an intermediate element (38), an exterior space (55) is formed which is not at all sealed, or not sealed in any pressure-tight fashion, with respect to the external atmosphere but is largely protected against the influences of the weather and is penetrated by the rotary shaft or push shaft (switching shaft 49) of the device (47 ... 50) for indicating the switch position and/or by the drive shaft (69) for actuating the isolating switch (44 + 45 + 63), and out of which exterior space (55) the aforesaid shafts then extend downwards out of the shorting element (20).

20. Section isolator according to one of Claims 1 to 19, characterized in that at that longitudinal end of the hollow insulator (101) in which the circuit breaker (102) is arranged, a metallic terminating plate (110) is arranged spaced outwards at a distance from the closure cover (103), the said terminating plate (110) being permanently connected to the closure cover via insulating spacing sleeves (111) and the connecting rods (112) which start from the hollow insulator, but being electrically insulated with respect to the closure cover, and in that a series resistor, in particular one in the form of a wound flat ribbon material (108) and lateral insulating discs (105, 106), is arranged between the aforesaid closure cover and the terminating plate. (Figure 7)

21. Section isolator according to Claim 20, characterized in that a current bar (109), which is connected at one end to the terminating plate (110) in a contact-forming fashion and is provided in certain sections with a portion of reduced cross-section and whose other end is attached in a contact-forming fashion to the one end, or to the free end, of the series resistor (108), starts from the metallic terminating plate (110).

22. Section isolator according to one of Claims 1 to 21, characterized in that the armature of the electromagnetic drive (lifting magnet 138) for the circuit breaker (137) or a linkage component (balance weight 141) which is connected to the armature is connected in an articulated fashion to a transmission lever (143) which is coupled by its one end to a fixed rotary bearing (144) and at its opposite end is connected in an articulated fashion to the push contact (147) of an isolating switch, in such a way that the isolating distance of the isolating switch is shorted in a sufficiently contact-forming fashion even before the circuit breaker is switched on, and is not disconnected until the switch-off process of the circuit breaker has ended. (Figure 9)

23. Section isolator according to Claim 22, characterized in that the push contact (147) of the isolating switch is coupled at its longitudinal end which is opposite the contact-forming end, via a driver element (148), to an actuation rod (149) which can be displaced manually or by motor in the longitudinal-axial direction out of a working position into an isolating position, and vice versa, specifically in such a way that, in the working position of the actuation rod, the push contact can be moved by the transmission lever, unimpeded, into its shorting position and back into its isolating position, in that, in contrast, in the isolating position of the actuation rod the push contact has also been locked by the driver element in its isolating position and, if appropriate, previously moved via the driver element from its shorting position into its isolating position. (Figure 9)

24. Section isolator according to Claim 23, characterized in that the longitudinal area of the actuation rod (149) which faces the push contact (147) is forked, in that a longitudinal area of the push contact which can be varied depending on the switch position of the said contact (147) is received between the forked portions, and in that the driver element (148) which serves to bring about coupling between the actuation rod and the push contact is formed by a pin which transversely penetrates the push contact and whose ends which protrude on both sides of the push contact engage in elongated holes (150) which are arranged in the forked portions of the actuation rod in the longitudinal direction. (Figure 9)

25. Section isolator according to Claim 23 or 24, characterized in that the drive of the actuation rod (149) is effected manually and in the same way as provided for in Claims 14 and 15 for an isolating switch or its push contact pin.

26. Section isolator according to one of Claims 1 to 25, characterized in that an element (push contact pin 63; toothed rack 154), which extends out of the interior of the shorting element (20), of an isolating switch or of a device which influences the isolating switch is coupled to a signalling disc (66) which in one of the two possible switch positions is concealed in a niche (67) of the closure cover (28) and in the second switch position emerges from the niche or is pushed out as far as the edge of the niche and thus can be recognized visually from the outside. (Figure 3)

27. Section isolator according to one of Claims 1 to 26, characterized in that the point of emergence from the exterior space (55), protected against influences of the weather, according to Claim 19 for the rotary shaft or push shaft (switching shaft 49) of a device for indicating the switch position and/or of a drive shaft (69) for a manual actuation of the isolating switch is surrounded, in particular if this point of emergence is directed vertically or obliquely downwards, by a droplet plate (57) with an outer, circumferential drainage edge.

28. Section isolator according to one of Claims 1 to 27, characterized in that the isolating distance (according to Claim 18), which is located between the first supporting disc (42) and the second supporting disc (43) and can be produced here between the two contact bushings (44, 45), of an isolating switch is arranged to the side of the intermediately insulated connecting linkage which connects the armature (46) of the lifting magnet (30) to the contact plunger (94) of the circuit breaker (23) and, additionally, extends parallel to this connecting linkage.

29. Section isolator according to one of Claims 1 to 28, characterized in that coupling eyelets or protruding lugs (58, 59; 113) with in each case one coupling opening (60, 61; 114) are formed on the two longitudinal ends of the shorting element (20) starting from its outer closure covers (27, 28) or from its terminating plate (110) (according to Claim 20), the coupling eyelets or coupling openings being located significantly above the centroidal axis, extending in the longitudinal direction, of the shorting element.

30. Section isolator according to one of Claims 1 to 29, characterized in that the connecting rods (29; 112; 117) for holding together the hollow insulator (26; 101; 116; 132) with the adjacent components (27, 28, 28 [sic]; 103 [sic] 110, etc.) are equipped at at least one of their longitudinal ends with means (inter alia 125, 130) for compensating extension. (Figure 8)

31. Section isolator according to Claim 30, characterized in that disc springs (125, 130) which are arranged [sic] to one another in a suitable manner are used as means for compensating extension for the connecting rods (29; 112; 117). (Figure 8)

32. Section isolator according to one of Claims 1 to 31, characterized in that the interior of the shorting element (20) or of its hollow insulator can be pressure-relieved by means of an overpressure safety valve, the blow-off opening of this valve being directed upwards.

33. Section isolator according to one of Claims 1 to 32, characterized in that a desiccant for reducing the moisture content of the medium which fills the interior, preferably activated alumina, is arranged in the interior of the shorting element (20).

34. Section isolator according to one of Claims 1 to 33, characterized in that the capacitor circuits which are arranged inside the shorting element (20) and the entire electronic assembly for ensuring electromagnetic compatibility (also referred to as EMC) are hermetically encapsulated (encapsulation 32).

## Revendications

1. Isolateur de section (10) destiné à séparer électriquement des tronçons voisins (11, 12) d'une caténaire électrique pour des véhicules moteurs, comprenant un isolateur sectionneur (18) et un élément de pontage (20) agencé sous la forme d'un isolateur creux, l'isolateur sectionneur (18) étant associé, pour le passage d'un pantographe du véhicule moteur, à une paire de patins (17) et étant équipé en outre d'une électrode auxiliaire (19) parallèle à la caténaire, et l'isolateur creux de l'élément de pontage (20) renfermant un contacteur de puissance (23) servant à mettre en court-circuit temporaire les tronçons voisins (11, 12) de la caténaire et comprenant un système d'entraînement (30) électromagnétique, ce dernier étant alimenté directement ou indirectement par là différence de tension apparaissant entre le potentiel d'un tronçon (11, 12) de caténaire et le potentiel de l'électrode auxiliaire (19), lorsqu'un arc électrique commutant vers l'électrode auxiliaire (19) est établi entre la paire de patins (17), reliée à un tronçon (11, 12) de caténaire, et le tronçon voisin (11, 12) de caténaire lors du passage du pantographe et pendant toute la durée de cet arc électrique, caractérisé par le fait que l'isolateur creux de l'élément de pontage (20) est constitué essentiellement par un tube isolant (26; 101; 116; 132) cylindrique creux, comprenant des couvercles (27, 28; 118, 120) appliqués de manière étanche contre les deux extrémités du tube, et par au moins deux tirants (29; 112; 117) qui sont munis d'éléments de vissage correspondants, qui traversent les couvercles avec étanchéité radiale et au moyen desquels les éléments précités de l'isolateur creux sont serrés les uns contre les autres, la force de traction de chaque tirant individuel étant supérieure à la force de traction prévisible au niveau de l'élément de pontage (20) monté entre des câbles porteurs (13, 14), et par le fait qu'à l'intérieur de l'isolateur creux sont disposés, outre le contacteur de puissance (23) et le système d'entraînement électromagnétique de celui-ci agencé sous la forme d'un aimant alternatif (30), un transformateur de courant saturé (31) à la suite duquel - sur le plan du montage - sont branchés des montages de condensateurs (32) électroniques, ainsi qu'un dispositif de verrouillage (34; 140) actionné par un aimant de maintien (33; 139) et destiné à bloquer le contacteur de puissance (23; 102; 137) dans sa position fermée au moins aussi longtemps que l'aimant alternatif est alimenté en tension, et enfin un sectionneur (44 + 45 + 63 + 135 + 136 + 147) dont la position de commutation peut être modifiée au moyen d'un arbre d'entraînement (69) qui sort de l'élément de pontage ou d'un couvercle (partie intermédiaire 38) de son isolateur creux et qui est actionné manuellement, par moteur ou par des moyens électromagnétiques.

2. Isolateur de section selon la revendication 1, caractérisé par le fait que le tube isolant (26; 101; 116; 132) cylindrique creux est en résine moulée résistant aux intempéries ou en résine thermodurcissable, ou bien en matériau céramique, en particulier de la porcelaine, ou enfin en verre.

3. Isolateur de section selon la revendication 1 ou 2, caractérisé par le fait qu'afin d'allonger la ligne de fuite, le tube isolant (26; 101; 116; 132) cylindrique creux est pourvu sur sa surface d'enveloppe extérieure d'un grand nombre de gorges (35) périphériques d'une profondeur relativement faible (par rapport à la conformation d'isolateurs connus), entre lesquelles sont par conséquent formés des collets ou nervures (36) périphériques.

4. Isolateur de section selon l'une des revendications 1 à 3, caractérisé par le fait que les tirants (29; 112; 117) destinés à maintenir ensemble les éléments de l'isolateur creux (26; 101; 116; 132) sont formés d'une matière isolante, en particulier d'une matière plastique renforcée par fibres de verre.

5. Isolateur de section selon l'une des revendications 1 à 4, caractérisé par le fait que l'intérieur de son élément de pontage (20) ou de son isolateur creux (26; 101; 116; 132) est blindé de façon étanche à la pression et à la dépression et est rempli avec un milieu isolant, de préférence gazeux, qui présente de meilleures propriétés d'isolation que le milieu "air", à savoir notamment de l'hexafluorure de soufre (SF₆).

6. Isolateur de section selon l'une des revendications 1 à 5, caractérisé par le fait que l'on utilise en tant que contacteur de puissance (23) un tube contacteur à vide dont le poussoir de contact (94) est relié directement ou indirectement aussi bien à un ressort de rappel (97) qu'à un ressort de compression (98) de contact et coopère avec ces ressorts lors des opérations de commutation.

7. Isolateur de section selon l'une des revendications 1 à 6, caractérisé par le fait que le poussoir de contact (94) du contacteur de puissance (23) ou un élément relié à celui-ci, par exemple sous la forme d'une coupelle de ressort (élément formant douille 93) ou d'une tige faisant saillie, entre en contact, lors de l'opération d'ouverture, avec une butée de limitation de course (100) au moins légèrement amortissante ou élastiquement déformable qui limite la course d'ouverture et amortit en même temps le choc.

8. Isolateur de section selon la revendication 6 ou 7, caractérisé par le fait que l'armature (46) de l'aimant alternatif (30) est ramenée, lors de l'opération d'ouverture, c'est-à-dire lors de la mise hors tension, dans sa position initiale par l'action d'un élément de rappel (ressort de compression 53), le trajet parcouru étant plus grand que celui du poussoir de contact (94) du contacteur de puissance (23), et par le fait que dans ce but, il est prévu une course libre correspondante dans un système de tige de liaison (poussoir 90) qui est placé entre l'armature et le poussoir de contact et est relié au ressort de rappel (97) et au ressort de compression (98) de contact du contacteur de puissance (23).

9. Isolateur de section selon l'une des revendications 1 à 8, caractérisé par le fait que la partie mobile du système d'entraînement électromagnétique ou l'armature (46) de l'aimant alternatif (30) pour le contacteur de puissance (23) ou le système de tige de liaison (poussoir 90) placé entre l'armature et le poussoir d'actionnement du contacteur de puissance est équipé d'une masse oscillante (74) dont l'effet de marteau, en coopération avec la course libre selon la revendication 8, garantit un blocage sûr du contacteur de puissance dans sa position fermée et, dans la direction opposée, une séparation sûre des contacts au niveau du contacteur de puissance, en cas d'ouverture.

10. Isolateur de section selon les revendications 8 et 9, caractérisé par le fait que la masse oscillante (74) est placée à l'extrémité du système de tige de liaison (poussoir 90) tournée vers l'armature (46) de l'aimant alternatif (30) et par le fait qu'il existe, entre ce système de tige et la masse oscillante (74) et donc l'armature (46) ou une tige de réglage (tige filetée 73) partant de l'armature, une marge de manoeuvre dans la direction axiale longitudinale qui fait partie de la course libre (suivant la revendication 8).

11. Isolateur de section selon l'une des revendications 8 à 10, caractérisé par le fait que le système de tige de liaison ou son poussoir (90) est formé d'un matériau électriquement isolant et remplit une fonction de séparation de potentiel.

12. Isolateur de section selon l'une des revendications 1 à 11, caractérisé par le fait que la partie mobile du système d'entraînement électromagnétique ou un prolongement (tige de traction 47) de l'armature (46) de l'aimant alternatif (30), ici en particulier un prolongement de l'armature dans la direction opposée au contacteur de puissance (23), est couplée à un dispositif d'indication de la position de commutation qui contient un arbre à déplacement en rotation ou en translation (arbre de commutation 49) qui sort de la chambre intérieure de l'élément de pontage (20) ou de son isolateur creux (26) et est équipé dans sa partie extérieure d'une aiguille ou d'un disque indicateur (50).

13. Isolateur de section selon l'une des revendications 1 à 12, caractérisé par le fait que le sectionneur est constitué par deux douilles de contact (44, 45), placées à distance l'une de l'autre, et une tige de contact coulissante (63) qui, en position fermée du sectionneur, relie les deux douilles de contact électriquement entre elles et qui, en position de séparation, est complètement dégagée de l'une (44) des douilles de contact et se trouve à une distance telle de celle-ci qu'un espace de coupure suffisant, ou correspondant au moins à des prescriptions, soit obtenu entre ladite douille de contact et l'extrémité associée du contact coulissant et l'autre douille de contact.

14. Isolateur de section selon la revendication 13, caractérisé par le fait que la tige de contact coulissante (63) du sectionneur est pourvue, au niveau de sa partie longitudinale éloignée des douilles de contact (44, 45), d'une denture (64) ou est reliée par cette extrémité longitudinale à une crémaillère et par le fait que la partie longitudinale dentée de la tige de contact coulissante ou la crémaillère liée à celle-ci coopère avec un pignon (65) au moyen duquel la tige de contact coulissante peut être déplacée axialement dans la position de commutation respective souhaitée.

15. Isolateur de section selon la revendication 14, caractérise par le fait que l'actionnement du sectionneur (44 + 45 + 63) s'effectue par mise en rotation d'un arbre d'entraînement (69) qui sort de l'isolateur creux (26), d'un couvercle de celui-ci ou d'une partie intermédiaire (38), qui est muni au niveau de son extrémité libre extérieure de préférence d'un axe transversal (70) radial et qui porte sur son extrémité orientée vers l'intérieur de l'élément de pontage (20) le pignon (65) et est solidaire de celui-ci.

16. Isolateur de section selon l'une des revendications 1 à 15, caractérisé par le fait qu'à l'intérieur de l'isolateur creux (26) au moins deux disques-supports (42, 43) sont disposés à distance l'un de l'autre et sont fixés sans possibilité de déplacement en translation, lesquels disques servent au support et à la fixation des éléments fonctionnels logés dans l'isolateur creux.

17. Isolateur de section selon la revendication 16, caractérisé par le fait qu'au moins un des disques-supports (42, 43) placés à l'intérieur de l'isolateur creux remplit non seulement une fonction de support mais aussi de conduction de courant.

18. Isolateur de section selon l'une des revendications 16 ou 17, caractérisé par le fait qu'à l'intérieur de l'isolateur creux (26) le contacteur de puissance (23) est disposé entre un couvercle (27) et un premier disque-support (42), par le fait qu'entre le premier disque-support (42) et un deuxième disque-support (43) sont placés le système de tige de liaison (poussoir 90 etc.) qui couple le contacteur de puissance (23) à son système d'entraînement électromagnétique (aimant alternatif 30), l'aimant de maintien (33) avec le dispositif de verrouillage (34) actionné par lui et destiné à bloquer le contacteur de puissance et enfin les deux douilles de contact (44, 45) qui peuvent être reliées électriquement par la tige de contact coulissante (63) du sectionneur et entre lesquelles on peut établir l'espace de coupure, et par le fait qu'entre le deuxième disque-support (43) et le deuxième couvercle (28) sont disposés et fixés le système d'entraînement électromagnétique sous la forme de l'aimant alternatif (30), le transformateur de courant saturé (31), y compris ses montages de condensateurs (c'est-a-dire un ensemble électronique placé dans un blindage (32)), et des parties du système de tige aussi bien du dispositif d'entraînement du sectionneur que du dispositif (47 ... 50) lié à l'aimant alternatif et destiné à l'indication de la position de commutation (si elle existe).

19. Isolateur de section selon l'une des revendications 1 à 18, caractérisé par le fait qu'à l'extrémité longitudinale de l'isolateur creux (26), dans laquelle sont disposés le système d'entraînement électromagnétique (aimant alternatif 30) et le transformateur de courant saturé (31), il est prévu, entre le couvercle (28) et une partie intermédiaire (38), un espace extérieur (55) qui n'est pas étanche du tout ou pas étanche à la pression vis-à-vis de l'atmosphère mais est protégé cependant dans une large mesure contre les intempéries et qui est traversé par l'arbre à déplacement en rotation ou en translation (arbre de commutation 49) du dispositif (47 ... 50) d'indication de la position de commutation et/ou par l'arbre d'entraînement (69) destiné à l'actionnement du sectionneur (44 + 45 + 63) et duquel les arbres mentionnés sortent ensuite vers le bas de l'élément de pontage (20).

20. Isolateur de section selon l'une des revendications 1 à 19, caractérisé par le fait qu'à l'extrémité longitudinale de l'isolateur creux (101) dans laquelle est disposé le contacteur de puissance (102), il est prévu une plaque terminale (110) métallique qui est disposée à distance à l'extérieur du couvercle (103) et est rendue solidaire de ce-lui-ci par l'intermédiaire de douilles d'écartement isolantes (111) et des tirants (112) sortant de l'isolateur creux, mais qui est cependant isolée électriquement vis-à-vis dudit couvercle, et par le fait qu'entre ledit couvercle et la plaque terminale est placée une résistance série, se présentant en particulier sous la forme d'un matériau en bande plate (108) enroulé et de disques isolants (105, 106) latéraux. (Figure 7)

21. Isolateur de section selon la revendication 20, caractérisé par le fait qu'il part de la plaque terminale (110) métallique un étrier de courant (109), présentant une réduction de section dans certaines parties, dont une extrémité est liée avec contact à ladite plaque et l'autre extrémité est fixée avec contact à une extrémité ou l'extrémité libre de la résistance série (108).

22. Isolateur de section selon l'une des revendications 1 à 21, caractérisé par le fait que l'armature du système d'entraînement électromagnétique (aimant alternatif 138) pour le contacteur de puissance (137) ou un élément du système de tige lié à l'armature (masse oscillante 141) est articulé sur un levier de transmission (143) dont une extrémité est articulée sur un palier de pivotement (144) fixe et dont l'extrémité opposée est articulée sur le contact coulissant (147) d'un sectionneur, de telle sorte que l'espace de coupure du sectionneur soit ponté avec un contact suffisant avant la fermeture du contacteur de puissance et ne soit séparé qu'après la fin de l'opération d'ouverture du contacteur de puissance. (Figure 9)

23. Isolateur de section selon la revendication 22, caractérise par le fait que le contact coulissant (147) du sectionneur est couple, au niveau de son extrémité opposée à l'extrémité établissant le contact, par l'intermédiaire d'un élément d'entraînement (148) à une tige d'actionnement (149) qui peut être déplacée manuellement ou par moteur dans la direction axiale longitudinale depuis une position de service à une position de coupure et inversement, de telle sorte qu'en position de service de la tige d'actionnement le contact coulissant puisse être amené sans obstacle par le levier de transmission à sa position de liaison et à nouveau à sa position de coupure, mais qu'en position de coupure de la tige d'actionnement le contact coulissant soit aussi bloqué par l'élément d'entraînement dans sa position de coupure, après avoir été le cas échéant amené par l'élément d'entraînement de sa position de liaison à sa position de coupure. (Figure 9)

24. Isolateur de section selon la revendication 23, caractérisé par le fait que la partie longitudinale de la tige d'actionnement (149) tournée vers le contact coulissant (147) est fourchue, par le fait qu'une partie longitudinale du contact coulissant, pouvant varier en fonction de la position de commutation dudit contact, est logée entre les parties fourchues et par le fait que l'élément d'entraînement (148) servant au couplage entre la tige d'actionnement et le contact coulissant est constitué par un axe qui traverse perpendiculairement le contact coulissant et dont les extrémités dépassant de part et d'autre dudit contact pénètrent dans des trous oblongs (150) aménagés dans les parties fourchues de la tige d'actionnement, dans la direction longitudinale. (Figure 9)

25. Isolateur de section selon la revendication 23 ou 24, caractérisé par le fait que l'entraînement de la tige d'actionnement (149) se fait manuellement ou par moteur et de la même manière que cela est prévu dans les revendications 14 et 15 pour un sectionneur ou la tige de contact coulissante de celui-ci.

26. Isolateur de section selon l'une des revendications 1 à 25, caractérisé par le fait qu'un élément (tige de contact coulissante 63; crémaillère 154) d'un sectionneur ou d'un dispositif agissant sur ledit interrupteur qui sort de la chambre intérieure de l'élément de pontage (20) est couplé à un disque de signalisation (66) qui est dissimulé, dans l'une des deux positions possibles de commutation, dans une partie en retrait (67) et qui, dans la deuxième position de commutation, sort de la partie en retrait ou est amené par coulissement jusqu'au bord de cette partie et est donc visible de l'extérieur. (Figure 3)

27. Isolateur de section selon l'une des revendications 1 à 26, caractérisé par le fait que l'ouverture de sortie de l'espace extérieur (55) selon la revendication 19, protégé contre les intempéries, pour l'arbre à déplacement en rotation ou en translation (arbre de commutation 49) d'un dispositif d'indication de position de commutation et/ou d'un arbre d'entraînement (69) pour un actionnement manuel du sectionneur, notamment lorsque cette sortie est orientée vers le bas perpendiculairement ou en biais, est entourée par une coupelle collectrice (57) comportant un rebord d'égouttement périphérique extérieur.

28. Isolateur de section selon l'une des revendications 1 à 27, caractérisé par le fait que l'espace de coupure d'un sectionneur qui est prévu (suivant la revendication 18) entre le premier (42) et le deuxième (43) disque-support et peut ici être réalisé entre les deux douilles de contact (44, 45) est disposé sur le côté du système de tige de liaison, muni d'une isolation intermédiaire, qui relie l'armature (46) de l'aimant alternatif (30) au poussoir de contact (94) du contacteur de puissance (23) et est parallèle audit système de tige.

29. Isolateur de section selon l'une des revendications 1 à 28, caractérisé par le fait qu'au niveau des deux extrémités de l'élément de pontage (20), partant des couvercles (27, 28) extérieurs ou de la plaque terminale (110) de celui-ci (suivant la revendication 20), sont formés des oeillets d'accrochage ou oreilles saillantes (58, 59; 113) comportant chacun(e) une ouverture d'accrochage (60, 61; 114), les oeillets ou ouvertures d'accrochage étant placé(e)s sensiblement au-dessus de l'axe longitudinal passant par le centre de gravité de l'élément de pontage.

30. Isolateur de section selon l'une des revendications 1 à 29, caractérisé par le fait que les tirants (29; 112; 117), destinés à maintenir ensemble l'isolateur creux (26; 101; 116; 132) et les éléments (27, 28, 28; 103, 110, etc.) adjacents à celui-ci, sont pourvus au niveau d'au moins une de leurs extrémités de moyens (entre autres 125, 130) de compensation de dilatation. (Figure 8).

31. Isolateur de section selon la revendication 30, caractérisé par le fait que les moyens utilisés pour la compensation de la dilatation pour les tirants (29; 112; 117) sont des rondelles élastiques (125, 130) disposées de manière appropriée les unes par rapport aux autres. (Figure 8).

32. Isolateur de section selon l'une des revendications 1 à 31, caractérisé par le fait que la pression régnant dans la chambre intérieure de l'élément de pontage (20) ou de son isolateur creux peut être relâchée à l'aide d'une soupape de sûreté contre les surpressions, l'ouverture d'échappement de ladite soupape étant orientée vers le haut.

33. Isolateur de section selon l'une des revendications 1 à 32, caractérisé par le fait que l'on place dans l'élément de pontage (20) un produit de déshydratation, de préférence de l'alumine active, destiné à réduire le taux d'humidité du milieu remplissant la chambre intérieure dudit élément.

34. Isolateur de section selon l'une des revendications 1 à 33, caractérisé par le fait que pour garantir une "compatibilité électromagnétique", les montages de condensateurs disposés à l'intérieur de l'élément de pontage (20) ou tout l'ensemble électronique sont enfermés hermétiquement (blindage 32).
